(19) Europäisches Patentamt
European Patent Office
Office européen des brevets

(11) EP 3 298 058 B1

(12) EUROPÄISCHE PATENTSCHRIFT

(45) Veröffentlichungstag und Bekanntmachung des Hinweises auf die Patenterteilung:
**17.04.2019 Patentblatt 2019/16**

(21) Anmeldenummer: **16722912.9**

(22) Anmeldetag: **17.05.2016**

(51) Int Cl.:
***C08G 18/79*** *(2006.01)* ***C08G 18/73*** *(2006.01)*
***C08G 18/28*** *(2006.01)* ***C08G 18/80*** *(2006.01)*
***C08G 18/32*** *(2006.01)* ***C09D 175/04*** *(2006.01)*
***C08G 18/62*** *(2006.01)* ***C08G 18/10*** *(2006.01)*

(86) Internationale Anmeldenummer:
**PCT/EP2016/061019**

(87) Internationale Veröffentlichungsnummer:
**WO 2016/184853 (24.11.2016 Gazette 2016/47)**

(54) **POLYURETHAN-BESCHICHTUNGSZUSAMMENSETZUNGEN**
POLYURETHANE COATING COMPOSITIONS
COMPOSITIONS DE REVÊTEMENT À BASE DE POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2015 EP 15168764**

(43) Veröffentlichungstag der Anmeldung:
**28.03.2018 Patentblatt 2018/13**

(73) Patentinhaber: **Covestro Deutschland AG**
**51373 Leverkusen (DE)**

(72) Erfinder:
- **KÖCHER, Jürgen**
**40764 Langenfeld (DE)**
- **HEBESTREIT, Tanja**
**51688 Wipperfürth (DE)**
- **EGGERT, Christoph**
**50733 Köln (DE)**

(74) Vertreter: **Levpat**
**c/o Covestro AG**
**Gebäude 4825**
**51365 Leverkusen (DE)**

(56) Entgegenhaltungen:
**EP-A1- 2 832 757 US-A1- 2011 269 897**

- **DATABASE WPI Week 200435 Thomson Scientific, London, GB; AN 2004-367023 XP002749924, & JP 2004 067835 A (YOKOHAMA RUBBER CO LTD) 4. März 2004 (2004-03-04)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

### Technisches Gebiet der Erfindung

Die vorliegende Erfindung betrifft nichtwässrige Beschichtungsmittelzusammensetzungen, enthaltend mindestens ein Polyol (A), mindestens eine silanmodifizierte Verbindung (B) der Formel (I), ggf. ein oder mehrere silanfreie, aliphatische oder cycloaliphatische Polyisocyanate (C) mit freien oder blockierten Isocyanatgruppen und mindestens einen Katalysator (D) für die Vernetzung der Silangruppen, wobei wenigstens eine der beiden Komponenten (B) und (C) freie oder blockierte Isocyanatgruppen enthalten muss. Ferner können die erfindungsgemäßen, nichtwässrigen Beschichtungsmittelzusammensetzungen ein oder mehrere Oberflächenadditive (E) und Lösungsmittel (F) enthalten. Die erfindungsgemäßen Beschichtungshilfsmittel eignen sich besonders für Automobillacke, insbesondere Automobilerstlackierungen (sog. OEM Lacke).

### Hintergrund der Erfindung

Zweikomponenten-Polyurethan (PUR)-Beschichtungsmittel werden aufgrund ihrer im Vergleich zu klassischen, Aminoplastharz-vernetzenden Lacksystemen guten Beständigkeit gegen Umwelteinflüsse, insbesondere sauren Regen, zur Decklackierung in der Automobilindustrie eingesetzt (W. Wieczorrek in: Stoye/Freitag, Lackharze, S. 215 ff, C. Hanser-Verlag, 1996;J. W. Holubka et al., J. Coat. Tech. Vol. 72, No. 901, S.77, 2000). Hier finden in der Regel OH-funktionelle Poly(meth)-acrylatharze und Polyisocyanate auf der Basis von Hexamethylendiisocyanat (HDI) Verwendung. Die Verwendung anderer Diisocyanate oder anderer Diisocyanatderivate ist ebenfalls möglich.

Seit vielen Jahren wird an der Entwicklung neuer Automobilklarlacke gearbeitet. Aufgrund der steigenden Qualitätsanforderung der Automobilindustrie wird insbesondere an der Verbesserung der Beständigkeit gegenüber Umwelteinflüssen und hoher mechanischer Stabilität, insbesondere der Kratzbeständigkeit, gearbeitet.

Eine Möglichkeit, die Kratzfestigkeit von Zweikomponenten-Polyurethanbeschichtungen zu verbessern, ist die Einführung von Trialkoxysilangruppen in die Beschichtungskomponenten. Diese Silankomponenten sind in der Lage, durch Vernetzung und Ausbildung von Siloxannetzwerken die Stabilität von Polyurethanbeschichtungen zu erhöhen. Dieses Prinzip lehrt die EP 1 273 640. Diese Publikation beschreibt Zweikomponenten (2K)-Beschichtungsmittel, enthaltend eine Polyol-Komponente und eine Vernetzerkomponente, bestehend aus aliphatischen und/oder cycloaliphatischen Polyisocyanaten oder den davon durch Polymerisierung, Allophanat-, Biuret- oder Urethanbildung abgeleiteten Polyisocyanaten, wobei 0,1 bis 95 mol-% der ursprünglich freien vorhandenen Isocyanatgruppen mit Bisalkoxysilylamin umgesetzt sind. Diese Beschichtungsmittel können zur Herstellung von Klar- oder Decklackierungen im Kraftfahrzeugbereich eingesetzt werden und weisen nach ihrer vollständigen Härtung eine gute Kratzbeständigkeit bei gleichzeitig guter Beständigkeit gegen Umwelteinflüsse auf. Schleifbarkeit und Polierbarkeit sowie der optische Eindruck der resultierenden Beschichtungen können jedoch noch weiter verbessert werden.

Das Prinzip von Polyurethanbeschichtungen, die Polyisocyanatverbindungen mit anteiliger Umsetzung der Isocyanatgruppen zu Silangruppen enthalten, ist in den letzten Jahren kontinuierlich weiterverfolgt worden, vgl. u.a. die Patentanmeldungen WO 2007/033786, WO 2008/74489, WO 2009/077181, US 2011/0269897, WO 2012/168079 und WO 2014/086530. In diesen Schriften werden verschiedene Alkoxysilan-haltige Polyisocyanate als Komponente für die Vernetzung mit Polyolen beschrieben. Für die Umsetzung mit Polyisocyanaten werden verschiedene Monoaminsilan-, Bisaminosilan- und Mercaptosilanbausteine sowie deren Mischungen verwendet. Neben der Verwendung verschiedener Silanbausteine werden auch neue Katalysatoren zur verbesserten Vernetzung der Silanstrukturen beschrieben.

Ein zweites Konzept betrifft die Verbesserung der Kratzfestigkeit von Zweikomponenten-Polyurethanbeschichtung durch die Zugabe von isocyanatfreien, silanterminierten Prepolymeren. Solche Konzepte werden zum Beispiel in den Patentanmeldungen EP 2676982 und EP 2735578 beschrieben.

Aufgrund des stetig steigenden Qualitätsbedarfs der Automobilklarlacke besteht nach wie vor Bedarf an neuen Bausteinen für die Herstellung solcher Beschichtungsformulierungen.

Ganz allgemein versteht man unter silanmodifizierten Verbindungen der hier beanspruchten Art solche Verbindungen, die Silangruppen mit hydrolysierbaren Resten enthalten und deren Polymerrückgrat nicht im Wesentlichen aus O-Si-O-Si-Ketten aufgebaut wird, wie das bei den Silikonen der Fall ist, sondern aus C-C-Ketten, die in den meisten Fällen durch Heteroatome unterbrochen sind und desweiteren Urethan-, Ether-, Ester-, Harnstoff-, Amid- und andere Struktureinheiten enthalten. Unter Feuchtigkeitseinwirkung und/oder unter dem Einfluss geeigneter Katalysatoren werden die Reste an den Silangruppen, zum Beispiel üblicherweise Acetat- oder Alkoxy-Gruppen, hydrolysiert, wobei reaktive Silanole entstehen, die im Anschluss unter Wasser-, Alkohol- oder Essigsäureabspaltung zu einem hochmolekularen Netzwerk kondensieren und aushärten.

Zusammensetzungen, die silanmodifizierte Verbindungen enthalten, zeichnen sich unter anderem durch eine hohe Haftung auf unterschiedlichsten Substraten ohne aufwändige Vorbehandlung (kein Primer notwendig) aus. Dies liegt daran, dass auf anorganischen Substratoberflächen normalerweise OH-Gruppen vorhanden sind, die mit den

reaktiven Silanolen des Polymers, die unter Einwirkung von Feuchtigkeit entstehen, reagieren können.

Die derzeit auf dem Markt kommerziell erhältlichen, silanmodifizierten Polyurethane und Polyharnstoffe basieren auf einem hochmolekularen Rückgrat, das (i) durch Umsetzung von NCO-haltigen Prepolymeren mit Aminosilanen oder (ii) durch Umsetzung von OHterminierten Prepolymeren, wie zum Beispiel Polyethern, Polyurethanen oder Polyestern, mit NCO-funktionellen Silanen oder iii) durch Umsetzung von NCO-haltigen Prepolymeren mit Mercaptosilanen erzeugt wird, wie in folgendem Formelschema gezeigt wird:

i)

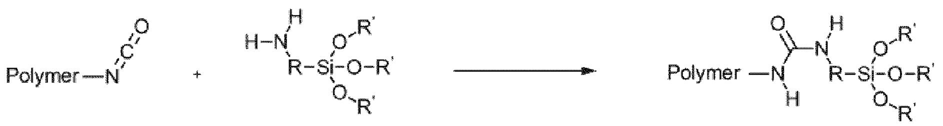

**Silanmodifizierter Polyharnstoff**

ii)

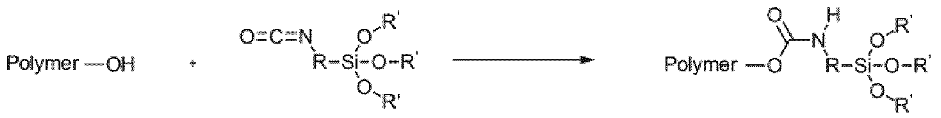

**Silanmodifiziertes Polyurethan**

iii)

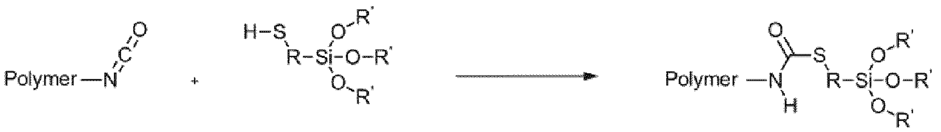

**Silanmodifiziertes Thiourethan**

Weiterhin ist - wie bereits erwähnt - der Härtegrad der entstehenden Beschichtung als Endprodukt nach der Silan-Vernetzung für Autolacke sehr wichtig. Bei silanmodifizierten Polyharnstoffen liegen normalerweise Endprodukte mit einem hohen Härtegrad vor, ggf. wird aber die Beschichtung so starr und hochvernetzt, dass Risse auftreten können. Im Gegensatz dazu stellen silanmodifizierte Polyurethane nach der Aushärtung weichere Endprodukte zur Verfügung. Allerdings ist die Synthese silanmodifizierter Polyurethane mit hohem Silangehalt aufgrund der relativ teuren NCO-funktionalisierten Silan-Vorläufer wirtschaftlich schwierig umzusetzen.

## Aufgabe der Erfindung

Der vorliegenden Erfindung liegt die Aufgabe zu Grunde, ein verbessertes, nichtwässriges Beschichtungssystem aus kostengünstigen und einfach zugänglichen Ausgangstoffen bereitzustellen. Angestrebt werden insbesondere nichtwässrige Beschichtungsmittelzusammensetzungen mit einer vorteilhaften Balance von chemischen Eigenschaften, wie insbesondere Aushärtungsgrad und Stabilität, und mit hervorragenden anwendungstechnischen Eigenschaften für Autolacke.

## Zusammenfassung der Erfindung

Gegenstand der vorliegenden Erfindung sind nichtwässrige Beschichtungsmittelzusammensetzungen gemäß Anspruch 1 oder gemäß einer oder mehrerer in den Unteransprüchen oder der nachstehenden Beschreibung dargelegten bevorzugten Ausführungsformen. Gegenstand der Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack oder Decklack bzw. die Anwendung des Beschichtungsverfahrens für die Automobilserienlackierung von Kraftfahrzeugen und/oder von Nutzfahrzeugen.

Überraschenderweise hat sich gezeigt, dass die erfindungsgemäßen Beschichtungsmittelzusammensetzungen zu Beschichtungen führen, die ein Eigenschaftsprofil aufweisen, das sie für Autolacke besonders geeignet macht.

Zu diesem Eigenschaftsprofil gehört während der Formulierung eine gute Verarbeitbarkeit und nach dem Einbrennen des Lacks eine hochgradige Nass- und Trockenkratzfestigkeit, insbesondere ein hervorragender Glanzerhalt nach Kratzbelastung, gleichzeitig aber auch eine gute Lösungsmittelbeständigkeit und eine geringe Pendeldämpfung. Die resultierenden Beschichtungen weisen einen sehr guten optischen Gesamteindruck auf.

**Definitionen**

Wie in dieser Anmeldung verwendet, soll der Begriff "aliphatisch" für gegebenenfalls substituierte, lineare oder verzweigte, Alkyl-, Alkenyl- und Alkinylgruppen stehen, in denen nicht benachbarte Methylengruppen ($-CH_2-$) durch Heteroatome, wie insbesondere Sauerstoff und Schwefel, oder durch sekundäre Aminogruppen ersetzt sein können.
Wie in dieser Anmeldung verwendet, soll der Begriff "alizyklisch" oder "cycloaliphatisch" für, gegebenenfalls substitutierte, carbozyklische oder heterozyklische Verbindungen stehen, die nicht zu den aromatischen Verbindungen gehören, wie beispielsweise Zykloalkane, Zykloalkene oder Oxa-, Thia-, Aza- oder Thiazazykloalkane. Spezielle Beispiele hierfür sind Cyclohexylgruppen, Cyclopentylgruppen, sowie deren durch ein oder zwei N- oder O-Atome unterbrochene Derivate wie z.B. Pyrimidin, Pyrazin, Tetrahydropyran oder Tetrahydrofuran. Weitere Beispiele für alizyklische Gruppen sind Polyisocyanate mit Ringstrukturen wie z.B. Iminooxadiazindion-, Oxadiazintrion, Oxazolidinon-, Allophanat-, zyklischen Isocyanurat-, zyklischen Uretdion-, zyklischen Urethan-, zyklischen Biuret-, zyklischen Harnstoff-, Acylharnstoff- und/oder Carbodiimid-Strukturen.
Wie in dieser Anmeldung verwendet, soll der Begriff "gegebenenfalls substituiert" bzw. "substituiert" insbesondere für eine Substitution der relevanten Struktureinheit durch -F, -Cl, -I, -Br, -OH, $-OCH_3$, $-OCH_2CH_3$, -O-Isopropyl der -O-nPropyl, $-OCF_3$, $-CF_3$, $-S-C_{1-6}$-Alkyl und/oder eine andere, ggf. über ein Heteroatom verknüpfte lineare oder verzweigte, aliphatische und/oder alizyklische Struktureinheit mit 1 bis 12 Kohlenstoffatomen stehen. Vorzugsweise steht er für eine Substitution durch Halogen (insbesondere -F, -Cl), $C_{1-6}$-Alkoxy (insbesondere Methoxy und Ethoxy), Hydroxy, Trifluormethyl und Trifluormethoxy.
Wie in dieser Anmeldung verwendet, soll der Begriff "niedermolekular" für Verbindungen stehen, deren Molekülmasse bis zu 800 $g \cdot mol^{-1}$ beträgt.
Wie in dieser Anmeldung verwendet, soll der Begriff "hochmolekular" für Verbindungen stehen, deren Molekülmasse 800 $g \cdot mol^{-1}$ übersteigt.
Unter Molekülmasse ist bei Verbindungen, deren Molekülmasse sich nicht aus einer exakt definierten Strukturformel ergibt, wie z.B. bei Polymeren, jeweils das Molekulargewichtszahlenmittel zu verstehen.
Wie in dieser Anmeldung verwendet, soll der Begriff "Polyisocyanat" für aliphatische oder cycloaliphatische Polyisocyanate einer NCO-Funktionalität von $> 1$, bevorzugt $\geq 2$ stehen, inbesondere Di- und Triisocyanate.
Wie in dieser Anmeldung verwendet, soll der Begriff "Monomer" für eine niedermolekulare Verbindung mit funktionellen Gruppen stehen, die am Aufbau von Oligomeren und/oder (Pre-)Polymeren beteiligt ist und eine definierte Molmasse besitzt.
Wie in dieser Anmeldung verwendet, soll der Begriff "Oligomer" für eine Verbindung stehen, in der nur wenige (d.h. $\leq 10$) Monomere gleicher oder verschiedener Art wiederholt miteinander verknüpft sind.
Wie in dieser Anmeldung verwendet, soll der Begriff "Prepolymer" für oligomere Verbindungen mit funktionellen Gruppen stehen, die am Endaufbau von Polymeren beteiligt sind. Insbesondere umfasst er - wie in der Polyurethanchemie üblich - Verbindungen, die mindestens eine Diisocyanat- und mindestens eine Dioleinheit enthalten und über die funktionellen Gruppen dieser Einheiten noch weiter polymerisierbar sind.
Wie in dieser Anmeldung verwendet, soll der Begriff "Polymer" für hochmolekulare Einheiten stehen, in denen Monomere, Oligomere und/oder Prepolymere gleicher oder verschiedener Art wiederholt miteinander verknüpft sind und die sich hinsichtlich Polymerisationsgrad, Molmassenverteilung bzw. Kettenlänge unterscheiden können.
Der Begriff "Verbindung" umfasst in dieser Anmeldung auch Oligomere und Prepolymere.
Der Begriff "blockiert" bedeutet im Rahmen dieser Anmeldung "reversibel blockiert". So kann beispielsweise aus einer blockierten Isocyanatgruppe durch Erwärmung wieder Isocyanat freigesetzt werden; blockierte Isocyanatgruppen sind also nach wie vor reaktiv mit Polyolen. Typischerweise versteht man unter einem blockierten Isocyanat eine Additionsverbindung eines hochreaktiven Isocyanats mit einem Alkohol (zu einem Urethan) oder einem Amin (zu einem Harnstoff), die bei höheren Temperaturen wieder in Alkohol bzw. Amin und in Isocyanat zerfällt. Bekannte Blockierungsmittel sind z.B. Acetessigsäure, Malonester, 3,5-Dimethylpyrazol, Butanonoxim, sekundäre Amine, Caprolactam oder verschiedene Alkohole.
Soweit sich aus dem Kontext nichts anderes ergibt, umfasst in dieser Anmeldung der Begriff "Isocyanatgruppe" immer sowohl freie Isocyanatgruppen (-NCO) als auch blockierte Isocyanatgruppen.
Wie in der Anmeldung verwendet, handelt es sich bei einem sekundären "Formamidsilan" um eine Verbindung der folgenden Strukturformel:

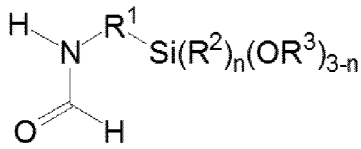

,

wobei $R^1$, $R^2$, $R^3$ und n wie in Anspruch 1 definiert sind. Eine "Formamidsilangruppe" wird entsprechend allgemein wie folgt dargestellt:

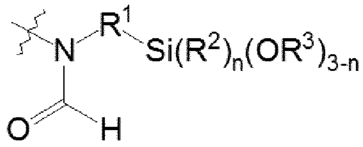

,

wobei $R^1$, $R^2$, $R^3$ und n wie in Anspruch 1 definiert sind.

Ist das Stickstoffatom mit drei Kohlenstoffatomen substituiert, spricht man von einem tertiären Formamidsilan bzw. einer tertiären Formamidsilangruppe. Entsprechend spricht man von einem sekundären Formamidsilan bzw. einer sekundären Formamidsilangruppe, wenn das Stickstoffatom mit zwei Kohlenstoffatomen substituiert ist.

**Ausführliche Beschreibung der Erfindung**

Die vorliegende Erfindung betrifft nichtwässrige Beschichtungsmittelzusammensetzungen, enthaltend mindestens eine polyhydroxylgruppenhaltige Verbindung (A), mindestens eine silanmodifizierte Verbindung B der Formel (I), wie in Anspruch 1 definiert, ggf. ein oder mehrere silanfreie aliphatische oder cycloaliphatische Polyisocyanate (C) mit freien oder blockierten Isocyanatgruppen und mindestens einen Katalysator (D) für die Vernetzung der Silangruppen. Außerdem können die erfindungsgemäßen, nichtwässrigen Beschichtungsmittelzusammensetzungen ein oder mehrere Rheologiehilfsmittel (E) und ein oder mehrere nichtwässrige Lösungsmittel (F) enthalten. Die erfindungsgemäßen, nichtwässrigen Beschichtungsmittelzusammensetzungen können weitere Bestandteile enthalten, wie nachstehend ausgeführt wird; in einer bevorzugten Ausführungsform bestehen sie aber nur aus den Bestandteilen (A) bis (F), oder einer Untergruppe davon, z.B. aus (A), (B), (C) und (D), aus (A), (B), (C) (D) und (E), aus (A), (B), (D), (E) und (F), aus (A), (B), (D) und (E), oder nur aus (A), (B) und (D).

In den erfindungsgemäßen Beschichtungsmittelzusammensetzungen muss wenigstens eine der beiden Komponenten (B) und (C) freie oder blockierte Isocyanatgruppen enthalten. Sofern die Zusammensetzung keine Komponente (C) enthält, muss also die Komponente (B) so gewählt werden, dass sie noch Isocyanatgruppen aufweist, über die anschließend die Vernetzung mit der Polyolkomponente (A) erfolgt.

Nachstehend werden die Komponenten im Einzelnen beschrieben.

**Komponente (A) - Polyol**

Als wesentliche Komponente (A) enthalten die erfindungsgemäßen Beschichtungsmittelzusammensetzungen zunächst eine Verbindung mit mehreren Hydroxylgruppen (in der Literatur auch polyhydroxylgruppenhaltige Verbindung oder kurz Polyol genannt).

Beispiele geeigneter oligomerer oder polymerer Verbindungen, die mindestens eine, insbesondere mindestens zwei, isocyanatreaktive hydroxyfunktionelle Gruppe(n) enthalten und als Komponente (A) in der vorliegenden Erfindung verwendet werden können, sind lineare und/oder verzweigte und/oder blockartig, kammartig und/oder statistisch aufgebaute Oligomere oder Polymere, wie (Meth)Acrylat(co)polymerisate, Polyester, Alkyde, Aminoplastharze, Polyurethane, Polylactone, Polycarbonate, Polyether, Epoxidharz-Amin-Addukte, (Meth)Acrylatdiole, partiell verseifte Polyvinylester oder Polyharnstoffe, von denen die (Meth)Acrylatcopolymerisate, die Polyester, die Polyurethane, die Polyether und die Epoxidharz-Amin-Addukte, insbesondere aber (Meth)Acrylat(co)polymerisate und Polyester, vorteilhaft sind.

Bevorzugt handelt es sich bei der Komponente A um mindestens einen hydroxyfunktionellen Polyester (oder Polyesterpolyol) mit einer Hydroxylzahl von 20 bis 240 mg KOH/g, vorzugsweise 30 bis 200 mg KOH/g und besonders bevorzugt 40 bis 160 mg KOH/g. Die Säurezahl liegt unter 20 mg KOH/g, vorzugsweise unter 15 mg KOH/g und besonders bevorzugt unter 12 mg KOH/g. Die Glasübergangstemperarur der Komponente A liegt bei - 40 bis +100° C, vorzugsweise 30 bis +80° C und besonders bevorzugt -30 bis +70° C. Das aus der Stöchiometrie der eingesetzten Ausgangsmaterialien berechenbare Molekulargewicht der Polyesterpolyole liegt bei ca. 460 bis 11300 g/mol, vorzugsweise bei ca. 570 bis

7500 g/mol und besonders bevorzugt bei ca. 700 bis 5700 g/mol. Bei der Herstellung der hydroxyfunktionellen Polyester können insgesamt 6 Gruppen von Monomerbestandteilen zur Anwendung kommen:

1) (Cyclo)Alkandiole (d. h. zweiwertige Alkohole mit (cyclo)aliphatisch gebundenen Hydroxylgruppen) des Molekulargewichtsbereichs 62 bis 286 g/mol, wie z. B. Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie z. B. Diethylenglykol, Triethylenglykol, Tetraethylenglykol, Dipropylenglykol, Tripropylenglykol, Polyethylen-, Polypropylen- oder Polybutylenglykole mit einem maximalen Molekulargewicht von ca. 2000 g/mol, vorzugsweise ca. 1000 g/mol und besonders bevorzugt ca. 500 g/mol. Umsetzungsprodukte der zuvor genannten Diole mit ε-Caprolacton können ebenfalls als Diole zum Einsatz gelangen.
2) Drei- und höherwertige Alkohole des Molekulargewichtsbereichs 92 bis 254 g/mol, wie z. B. Glycerin, Trimethylolpropan, Pentaerythrit, Dipentaerythrit und Sorbit.
3) Monoalkohole, wie z. B. Ethanol, 1- und 2-Propanol, 1- und 2-Butanol, 1-Hexanol, 2-Ethylhexanol, Cyclohexanol und Benzylalkohol.
4) Dicarbonsäuren des Molekulargewichtsbereichs 116 bis ca. 600 g/mol und/oder deren Anhydride, wie z. B. Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Maleinsäureanhydrid, Fumarsäure, Bernsteinsäure, Bernsteinsäureanhydrid, Adipinsäure, Dodecandisäure, hydrierte Dimerfettsäuren.
5) Höherfunktionelle Carbonsäuren bzw. deren Anhydride, wie z. B. Trimellithsäure und Tri-mellithsäureanhydrid.
6) Monocarbonsäuren, wie z. B. Benzeosäure, Cyclohexancarbonsäure, 2-Ethylhexansäure, Capronsäure, Caprylsäure, Caprinsäure, Laurinsäure, natürliche und synthetische Fettsäuren.

Weitere bevorzugte hydroxyfunktionelle Komponenten sind (Meth)acrylatcopolymerisate. Besonders gut geeignete (Meth)Acrylatcopolymerisate weisen

- eine OH-Zahl von 100 bis 220, vorzugsweise 130 bis 200, bevorzugt 140 bis 190 und insbesondere 145 bis 180 mg KOH/g,
- eine Glasübergangstemperatur von -35° bis +60° C, insbesondere -25° bis +40° C,
- ein zahlenmittleres Molekulargewicht von 1.000 bis 10.000 Dalton, insbesondere 1.500 bis 5.000 Dalton, und
- ein massenmittleres Molekulargewicht von 2.000 bis 40.000 Dalton, insbesondere 3.000 bis 20.000 Dalton, auf.

Die (Meth)Acrylatcopolymerisate enthalten eine ihrer OH-Zahl entsprechende Menge an hydroxylgruppenhaltigen, olefinisch ungesättigten Monomeren (a) einpolymerisiert, wovon

(a1) 20 bis 90 Gew.-%, vorzugsweise 22 bis 85 Gew.-%, bevorzugt 25 bis 80 Gew.-% und insbesondere 28 bis 75 Gew.-%, jeweils bezogen auf die hydroxylgruppenhaltigen Monomeren (a), aus der Gruppe, bestehend aus 4-Hydroxybutyl(meth)acrylat und 2-Alkyl-propan-1,3-diol-mono(meth)acrylaten, und

(a2) 20 bis 80 Gew.-%, vorzugsweise 15 bis 78 Gew.-%, bevorzugt 20 bis 75 Gew.-% und insbesondere 25 bis 72 Gew.-%, jeweils bezogen auf die hydroxylgruppenhaltigen Monomeren (a), aus der Gruppe, bestehend aus sonstigen hydroxylgruppenhaltigen, olefinisch ungesättigten Monomeren, ausgewählt werden.

Beispiele geeigneter 2-Alkyl-propan-1,3-diol-mono(meth)acrylate (a1) sind 2-Methyl-, 2-Ethyl-, 2-Propyl-, 2-Isopropyl- oder 2-n-Butyl-propan-1,3-diolmono(meth)acrylat, wovon 2-Methyl-propan-1,3-diol-mono(meth)acrylat besonders vorteilhaft ist und bevorzugt verwendet wird.

Beispiele geeigneter sonstiger hydroxylgruppenhaltiger, olefinisch ungesättigter Monomere (a2) sind Hydroxyalkylester von olefinisch ungesättigten Carbon-, Sulfon- und Phosphonsäuren und sauren Phosphor- und Schwefelsäureestern, insbesondere Carbonsäuren, wie Acrylsäure, beta-Carboxyethylacrylat, Methacrylsäure, Ethacrylsäure und Crotonsäure, insbesondere Acrylsäure und Methacrylsäure. Sie leiten sich von einem Alkylenglykol ab, der mit der Säure verestert ist, oder sie sind durch die Umsetzung der Säure mit einem Alkylenoxid, wie Ethylenoxid oder Propylenoxid erhältlich. Bevorzugt werden die Hydroxyalkylester, in denen die Hydroxyalkylgruppe bis zu 20 Kohlenstoffatome enthält, verwendet, insbesondere 2-Hydroxyethyl- oder 3-Hydroxypropylacrylat oder -methacrylat; 1A-Bis(hydroxymethyl)cyclohexan- oder Octahydro-4,7-methano-1H-inden-dimethanol-monoacrylat oder -monomethacrylat; oder Umsetzungsprodukte aus cyclischen Estern, wie z.B. ε-Caprolacton und seinen Hydroxyalkylestern; oder olefinisch ungesättigte Alkohole wie Allylalkohol; oder Polyole, wie Trimethylolpropanmono- oder diallylether oder Pentaerythritmono-, -di- oder -triallylether; verwendet.

Diese höherfunktionellen Monomeren (a2) werden im Allgemeinen nur in untergeordneten Mengen eingesetzt. Im Rahmen der vorliegenden Erfindung sind hierbei "unter untergeordneten Mengen" an höherfunktionellen Monomeren

(a2) solche Mengen zu verstehen, welche nicht zur Vernetzung oder Gelierung der (Meth)Acrylatcopolymerisate A führen, es sei denn, sie sollen in der Form von vernetzten Mikrogelteilchen vorliegen.

Des Weiteren kommt ethoxylierter und/oder propoxylierter Allylakohol, der von der Firma Arco Chemicals vertrieben wird, oder 2-Hydroxyalkylallylether, insbesondere 2-Hydroxyethylallylether, als Monomer (a2) in Betracht. Sofern verwendet, werden sie vorzugsweise nicht als alleinige Monomere (a2), sondern in einer Menge von 0,1 bis 10 Gew.-%, bezogen auf das (Meth)Acrylatcopolymerisat, eingesetzt.

Des Weiteren kommen Umsetzungsprodukte aus den vorstehend aufgeführten olefinisch ungesättigten Säuren, insbesondere Acrylsäure und/oder Methacrylsäure, mit dem Glycidylester einer in alpha-Stellung verzweigten Monocarbonsäure mit 5 bis 18 Kohlenstoffatomen je Molekül, insbesondere eine Versatic®-Säure, oder anstelle der Umsetzungsprodukte eine äquivalenten Menge an den vorstehend aufgeführten olefinisch ungesättigten Säuren, insbesondere Acryl- und/oder Methacrylsäure, die dann während oder nach der Polymerisationsreaktion mit dem Glycidylester einer in alpha-Stellung verzweigten Monocarbonsäure mit 5 bis 18 C-Atomen je Molekül, insbesondere einer Versatic®-Säure (vgl. Römpp Lexikon Lacke und Druckfarben, Georg Thieme Verlag, Stuttgart, New York, 1998, »Versatic®-Säuren«, Seiten 605 und 606), umgesetzt wird, in Betracht.

Nicht zuletzt sind Acryloxysilan-enthaltende Vinylmonomere als Monomere (a2) geeignet, die durch Umsetzung hydroxyfunktioneller Silane mit Epichlorhydrin und anschließender Umsetzung des Reaktionsproduktes mit (Meth)acrylsäure und/oder Hydroxyalkyl- und/oder -cycloalkylestern der (Meth)Acrylsäure und/oder weiterer hydroxylgruppenhaltiger Monomere (a1) und (a2) herstellbar sind.

Außer den Hydroxylgruppen können die (Meth)Acrylatcopolymerisate noch andere isocyanatreaktive funktionelle Gruppen, wie primäre und sekundäre Aminogruppen, enthalten.

Außer den vorstehend beschriebenen isocyanatreaktiven funktionellen Gruppen können die (Meth)acrylatcopolymerisate noch zusätzliche, thermisch aktivierbare, reaktive funktionelle Gruppen, wie Carboxylgruppen, Methylolethergruppen, Epoxidgruppen und/oder blockierte Isocyanatgruppen, in untergeordneten Mengen enthalten.

Beispiele geeigneter olefinisch ungesättigter Monomere (a3), mit deren Hilfe isocyanatreaktive Aminogruppen und zusätzliche, thermisch aktivierbare, reaktive funktionelle Gruppen in die (Meth)Acrylatcopolymerisate eingeführt werden können, sind

(a31) Monomere, die mindestens eine Aminogruppe pro Molekül tragen, wie Aminoethylacrylat, Aminoethylmethacrylat, Allylamin oder N-Methylaminoethylacrylat; und/oder

(a32) Monomere, die mindestens eine Säuregruppe pro Molekül tragen, wie Acrylsäure, β-Carboxyethylacrylat, Methacrylsäure, Ethacrylsäure, Crotonsäure, Maleinsäure, Fumarsäure oder Itaconsäure; olefinisch ungesättigte Sulfon- oder Phosphonsäuren oder deren Teilester; Maleinsäuremono(meth)acryloyloxyethylester, Bernsteinsäuremono(meth)acryloyloxyethyl-ester Phthalsäuremono(meth)acryloyloxyethylester; oder Vinylbenzoesäure und Methylvinylbenzoesäure, sowie Vinylbenzsolsulfonsäure (jeweils alle Isomere).

(a33) Epoxidgruppen-enthaltende Monomere, wie der Glycidylester der Acrylsäure, Methacrylsäure, Ethacrylsäure, Crotonsäure, Maleinsäure, Fumarsäure oder Itaconsäure oder Allylglycidylether.

Darüber hinaus können die (Meth)Acrylatcopolymerisate noch mindestens ein olefinisch ungesättigtes Monomer (a4) einpolymerisiert enthalten, das im Wesentlichen oder völlig frei von reaktiven funktionellen Gruppen ist, wie:

Monomere (a41):

Im Wesentlichen säuregruppenfreie (Meth)acrylsäureester, wie (Meth)Acrylsäurealkyl- oder -cycloalkylester mit bis zu 20 Kohlenstoffatomen im Alkylrest, insbesondere Methyl-, Ethyl-, n-Propyl-, n- Butyl-, sec.-Butyl-, tert.-Butyl-, Hexyl-, Ethylhexyl-, Stearyl- und Laurylacrylat oder -methacrylat; cycloaliphatische (Meth)acrylsäureester, insbesondere Cyclohexyl-, Isobornyl-, Dicyclopentadienyl-, Octahydro-4,7-methano-1H-inden-methanol- oder tert.-Butylcyclohexyl(meth)acrylat; (Meth)Acrylsäureoxaalkylester oder -oxacycloalkylester wie Ethoxytriglykol(meth)acrylat und Methoxyoligoglykol(meth)acrylat mit einem Molekulargewicht $M_n$ von vorzugsweise 550 g/mol oder andere ethoxylierte und/oder propoxylierte hydroxylgruppenfreie (Meth)Acrylsäurederivate (weitere Beispiele geeigneter Monomere (31) dieser Art sind aus der Offenlegungsschrift DE 196 25 773 A1, Spalte 3, Zeile 65, bis Spalte 4, Zeile 20, bekannt). Diese können in untergeordneten Mengen höherfunktionelle (Meth)Acrylsäurealkyl- oder -cycloalkylester, wie Ethylenglykol-, Propylenglykol-, Diethylenglykol-, Dipropylenglykol-, Butylenglykol-, Pentan-1,5-diol-, Hexan-1,6-diol-, Octahydro-4,7-methano-1H-inden-dimethanol- oder Cyclohexan-1,2-, -1,3- oder -1,4-diol-di(meth)acrylat; Trimethylolpropan-di- oder -tri(meth)acrylat; oder Pentaerythritdi-, -tri- oder -tetra(meth)acrylat enthalten. Hierbei sind unter untergeordneten Mengen an höherfunktionellen Monomeren (a41) solche Mengen zu verstehen, welche nicht zur Vernetzung oder Gelierung der Copolymerisate führen, es sei denn, sie liegen in der Form von vernetzten Mikrogelteilchen vor.

Monomere (a42):

Vinylester von in alpha-Stellung verzweigten Monocarbonsäuren mit 5 bis 18 C-Atomen im Molekül. Die verzweigten Monocarbonsäuren können erhalten werden durch Umsetzung von Ameisensäure oder Kohlenmonoxid und Wasser mit Olefinen in Anwesenheit eines flüssigen, stark sauren Katalysators; die Olefine können Crack-Produkte von paraffinischen Kohlenwasserstoffen, wie Mineralölfraktionen, sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei denen die Carboxylgruppen vorwiegend an einem quaternären Kohlenstoffatom sitzen. Andere olefinische Ausgangsstoffe sind z.B. Propylentrimer, Propylentetramer und Diisobutylen. Die Vinylester können aber auch auf an sich bekannte Weise aus den Säuren hergestellt werden, z.B. indem man die Säure mit Acetylen reagieren lässt.

Besonders bevorzugt werden - wegen der guten Verfügbarkeit - Vinylester von gesättigten aliphatischen Monocarbonsäuren mit 9 bis 11 C-Atomen, die am alpha-C-Atom verzweigt sind, eingesetzt. Vinylester dieser Art werden unter der Marke VeoVa® vertrieben (vgl. auch Römpp Lexikon Lacke und Druckfarben, Georg Thieme Verlag, Stuttgart, New York, 1998, Seite 598).

Monomere (a 43):

Nitrile, wie Acrylnitril und/oder Methacrylnitril.

Monomere (a44):

Vinylverbindungen, insbesondere Vinyl- und/oder Vinylidendihalogenide, wie Vinylchlorid, Vinylfluorid, Vinylidendichlorid oder Vinylidendifluorid; N-Vinylamide, wie Vinyl-N-methylformamid, N-Vinylcaprolactam oder NVinylpyrrolidon; 1-Vinylimidazol; Vinylether, wie Ethylvinylether, n-Propylvinylether, Isopropylvinylether, n-Butylvinylether, Isobutylvinylether und/oder Vinylcyclohexylether; und/oder Vinylester, wie Vinylacetat, Vinylpropionat, Vinylbutyrat, Vinylpivalat und/oder der Vinylester der 2- Methyl-2-ethyl-heptansäure.

Monomere (a 45):

Allylverbindungen., insbesondere Allylether und -ester wie Allylmethyl-, - ethyl-, -propyl- oder -butylether oder Allylacetat, -propionat oder -butyrat.

Monomere (a 46):

Polysiloxanmakromonomere, die ein zahlenmittleres Molekulargewicht Mn von 1.000 bis 40.000 g/mol und im Mittel 0,5 bis 2,5 ethylenisch ungesättigte Doppelbindungen pro Molekül aufweisen; insbesondere Polysiloxanmakromonomere, die ein zahlenmittleres Molekulargewicht $M_n$ von 2.000 bis 20.000 g/mol, besonders bevorzugt 2.500 bis 10.000 g/mol und insbesondere 3.000 bis 7.000 g/mol und im Mittel 0,5 bis 2,5, bevorzugt 0,5 bis 1,5, ethylenisch ungesättigte Doppelbindungen pro Molekül aufweisen, wie sie in der DE 38 07 571 A1 auf den Seiten 5 bis 7, der DE 37 06 095 A1 in den Spalten 3 bis 7, der EP 0 358 153 B1 auf den Seiten 3 bis 6, in der US 4,754,914 A1 in den Spalten 5 bis 9, in der DE 44 21 823 A1 oder in der internationalen Patentanmeldung WO 1992/22615 auf Seite 12, Zeile 18, bis Seite 18, Zeile 10, beschrieben sind.

Die Monomeren (a1) und (a2) sowie (a3) und/oder (a4) werden so ausgewählt, dass die vorstehend angegebenen OH-Zahlen und Glasübergangstemperaturen resultieren. Die Auswahl der Monomeren (a) zur Einstellung der Glasübergangstemperaturen kann vom Fachmann unter Zuhilfenahme der folgenden Formel von Fox, mit der die Glasübergangstemperaturen von Poly(meth)acrylaten näherungsweise berechnet werden kennen, vorgenommen werden:

$$n = x$$

$$1/Tg = \Sigma\, W_n/Tg_n; \quad \Sigma_n\, W_n = 1 \quad n = 1$$

Tg = Glasübergangstemperatur des Poly(meth)acrylats;
$W_n$ = Gewichtsanteil des n-ten Monomers;
$Tg_n$ = Glasübergangstemperatur des Homopolymers aus dem n-ten
Monomer und x = Anzahl der verschiedenen Monomeren.

Die Herstellung der in der Erfindung bevorzugt verwendeten (Meth)Acrylatcopolymerisate weist keine verfahrenstechnischen Besonderheiten auf, sondern erfolgt mit Hilfe der auf dem Kunststoffgebiet üblichen und bekannten Methoden der kontinuierlichen oder diskontinuierlichen radikalisch initiierten Copolymerisation in Masse, Lösung, Emulsion, Miniemulsion oder Mikroemulsion unter Normaldruck oder Überdruck in Rührkesseln, Autoklaven, Rohrreaktoren, Schlaufenreaktoren oder Taylorreaktoren bei Temperaturen von vorzugsweise 50 bis 200°C.

Beispiele geeigneter Copolymerisationsverfahren werden in den publizierten Anmeldungen DE 197 09 465 A1, DE 197 09 476 A1, DE 28 48 906 A1, DE 195 24 182 A1, DE 198 28742 A1, DE 196 28143 A1, DE 196 28 142 A1, EP 0 554 783 A1, WO 1995/27742, WO 1982/02387 oder WO 1998/02466 beschrieben. Die Copolymerisation kann indes auch in Polyolen als Reaktionsmedium durchgeführt werden, wie dies beispielsweise in der deutschen Patentanmeldung DE 198 50 243 A1 beschrieben wird. Beispiele geeigneter radikalischer Initiatoren sind Dialkylperoxide, wie Di-tert.-Butylperoxid oder Dicumylperoxid; Hydroperoxide, wie Cumolhydroperoxid oder tert.-Butylhydroperoxid; Perester, wie tert.-Butylperbenzoat, tert.-Butylperpivalat, tert.-Butylper-3,5,5-trimethylhexanoat oder tert.-Butylper-2-ethylhexanoat; Peroxodicarbonate; Kalium-, Natrium- oder Ammoniumsperoxodisulfat; Azoinitiatoren, beispielsweise Azodinitrile wie Azobisisobutyronitril; C-C-spaltende Initiatoren wie Benzpinakolsilylether; oder eine Kombination eines nicht oxidierenden Initiators mit Wasserstoffperoxid. Es können auch Kombinationen der vorstehend beschriebenen Initiatoren eingesetzt werden.

Weitere Beispiele geeigneter Initiatoren werden in der deutschen Patentanmeldung DE 196 28 142 A1, Seite 3, Zeile 49, bis Seite 4, Zeile 6, beschrieben. Vorzugsweise werden vergleichsweise große Mengen an radikalischem Initiator zugegeben, wobei der Anteil des Initiators am Reaktionsgemisch, jeweils bezogen auf die Gesamtmenge der Monomeren (a) und des Initiators, besonders bevorzugt 0,2 bis 20 Gew.-%, ganz besonders bevorzugt 0,5 bis 15 Gew.-% und insbesondere 1,0 bis 10 Gew.-%, beträgt.

Des Weiteren können Thiocarbonylthio-Verbindungen oder Mercaptane wie Dodecylmercaptan als Kettenübertragungsmittel oder Molekulargewichtsregler verwendet werden.

Geeignet sind z.B. Setalux 1774 SS-65, Setalux D A 665 BA, Setalux D A 870 BA, Setalux D A 365 BA/X, Setalux D A HS 1170 BA, Setalux D A 760 BA/X der Fa. Nuplex. Auch aliphatische Polycarbonatpolyole kommen zum Aufbau der erfindungsgemäßen Prepolymere in Betracht. Polycarbonatpolyole können bekanntlich aus der Kondensationsreaktion von Phosgen mit Polyolen oder der Umesterung geeigneter organischer Carbonate mit Polyolen erhalten werden. Als organische Carbonate kommen Alkyl- und Alkylencarbonate und deren Mischungen in Betracht. Als Beispiele seien Dimethylcarbonat (DMC), Diethylcarbonat (DEC) und Ethylencarbonat genannt. Als Polyole kommen die oben unter dem Abschnitt Polyesterpolyole genannten in Betracht. Die Funktionalität der eingesetzten Polycarbonatpolyole beträgt bevorzugt 1,6 bis 3,8, besonders bevorzugt 1,8 bis 3,5. Diese Polycarbonatpolyole haben ein zahlenmittleres Molgewicht von bevorzugt 100 bis 6000 g/mol und besonders bevorzugt von 100 bis 4000 g/mol. Die OH-Zahl ist von der Funktionalität der Polycarbonatpolyole abhängig und beträgt typischerweise 20 bis 900 mg KOH/g.

Weitere geeignete Polyole sind beispielsweise auch die in EP 0 689 556 und EP 0 937 110 beschriebenen, z. B. durch Umsetzung epoxidierter Fettsäureester mit aliphatischen oder aromatischen Polyolen unter Epoxidringöffnung erhältlichen speziellen Polyole.

Hydroxylgruppen enthaltende Polybutadiene können ebenfalls als Polyole dienen.

**Komponente B**

Als wesentliche Komponente (B) enthalten die erfindungsgemäßen Beschichtungsmittelzusammensetzungen mindestens eine silanmodifizierte Verbindung der Formel (I), insbesondere eine Verbindung der Formel (II), wie jeweils in den Ansprüchen definiert. Nachstehend werden solche Verbindungen der Formel (I) bzw. (II) aufgrund ihrer Silanmodifikation (insbesondere Silanterminierung) mit STP abgekürzt. Im endgültig ausgehärteten Zustand stellt die Erfindung über -Si-O-Si-Brücken kondensierte Polyurethan (PU)-Polymere als dauerhafte Beschichtungen zur Verfügung.

Die erfindungsgemäß zum Einsatz kommende Komponente (B) enthält mindestens eine silanmodifizierte (d.h. tertiäre Silanformamidgruppen enthaltende) Verbindung der Formel (I):

Formel (I):

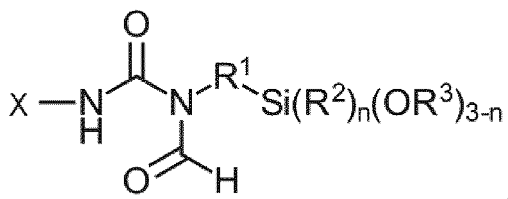

,

wobei in der Formel (I) gilt:

X stellt einen organischen Molekülrest, insbesondere einen gegebenenfalls substituierten, linearen oder verzweigten, aliphatischen oder cycloaliphatischen organischen Molekülrest, dar;

$R^1$ stellt eine mindestens zweiwertige, gegebenenfalls substituierte, lineare oder verzweigte, aliphatische und/oder alizyklische Struktureinheit mit 1 bis 12 Kohlenstoffatomen dar, wobei ein oder mehrere nicht benachbarte Methylengruppen jeweils durch O oder S ersetzt sein können;

$R^2$ und $R^3$ stellen jeweils unabhängig voneinander eine gegebenenfalls substituierte, lineare oder verzweigte, aliphatische und/oder alizyklische Gruppe mit 1 bis 12 Kohlenstoffatomen dar; und

n stellt eine ganze Zahl von 0 bis 2 dar.

Insbesondere wird erfindungsgemäß, in einer bevorzugten Ausführungsform, eine Verbindung der Formel (II) als silanmodifizierte Komponente (B) eingesetzt:

Formel (II):

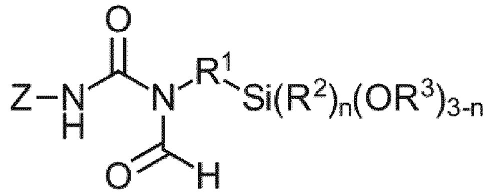

,

wobei in der Formel (II) gilt:

Z ist ein Molekülrest, der aus (i) einem Polyisocyanat oder (ii) einem NCO-haltigen Polyurethanprepolymer besteht, wobei in (i) oder (ii) pro Molekül mindestens eine NCO-Gruppe der genannten Strukturen mit einem sekundären Formamidsilan modifiziert ist, so dass eine Verbindung der Formel (II) entsteht; und

$R^1$, $R^2$, $R^3$ und n sind wie oben definiert.

Die als Grundkörper Z für die Polyisocyanat-gruppenhaltigen Verbindungen (B) dienenden acyclischen und/oder aliphatischen Polyisocyanate sind bevorzugt an sich bekannte substituierte oder unsubstituierte aliphatische Polyisocyanate. Beispiele für bevorzugte Polyisocyanate sind Tetramethylen-1,4-diisocyanat, Pentan-1,5-diisocyanat, Hexamethylen-1,6-diisocyanat, 2,2,4-Trimethylhexan-1,6-diisocyanat, Ethylendiisocyanat, 1,12-Dodecandiisocyanat, 3-Isocyanatomethyl-3,5,5-trimethylcyclohexylisocyanat (Isophorondiisocyanat, IPDI), Bis-(4-isocyanatocyclohexyl)methan ($H_{12}MDI$) und Mischungen der vorgenannten Polyisocyanate. Weiterhin bevorzugte Polyisocyanatgrundkörper für die Komponente (B) sind die durch Trimerisierung, Dimerisierung, Urethan-, Biuret-, Uretdion- und/oder Allophanatbildung von einem solchen acyclischen aliphatischen Polyisocyanat abgeleiteten Polyisocyanate, insbesondere das Biuret-Dimer und/oder das Allophanat-Dimer und/oder das Isocyanurat-Trimer.

In einer weiteren Ausführungsform sind die Polyisocyanatgrundkörper für die Komponente (B) Polyisocyanat-Prepolymerisate mit Urethan-Struktureinheiten, welche durch Umsetzung von Polyolen mit einem stöchiometrischen Überschuss an vorgenannten acyclischen und/oder aliphatischen Polyisocyanaten erhalten werden. Solche Polyisocyanat-Prepolymere sind beispielsweise in US-A 4,598,131 beschrieben.

Polyisocyanate zur Herstellung der Prepolymere können die oben genannten Polyisocyanate sein.

Einsetzbare polymere Polyole zur Herstellung der Prepolymere weisen ein zahlenmittleres Molekulargewicht $M_n$ von 400 bis 8000 g/mol, bevorzugt von 400 bis 6000 g/mol und besonders bevorzugt von 400 bis 3000 g/mol auf. Ihre Hydroxylzahl beträgt 22 bis 400 mg KOH/g, bevorzugt 30 bis 300 mg KOH/g und besonders bevorzugt 40 bis 250 mg KOH/g und weisen eine OH-Funktionalität von 1,5 bis 6, bevorzugt von 1,7 bis 5 und besonders bevorzugt von 2,0 bis 5 auf.

Polyole zur Herstellung der Prepolymere sind die in der Polyurethanlacktechnologie bekannten organischen Polyhydroxylverbindungen, wie beispielsweise die üblichen Polyesterpolyole, Polyacrylatpolyole, Polyurethanpolyole, Polycarbonatpolyole, Polyetherpolyole, Polyesterpolyacrylatpolyole sowie Polyurethanpolyacrylatpolyole, Polyurethanpolyesterpolyole, Polyurethanpolyetherpolyole, Polyurethanpolycarbonatpolyole, Polyesterpolycarbonatpolyole, Phenol/Formaldehydharze, allein oder in Mischungen. Bevorzugt sind Polyesterpolyole, Polyetherpolyole oder Polycarbonatpolyole, besonders bevorzugt sind Polyetherpolyole.

Als Polyetherpolyole seien z.B. die Polyadditionsprodukte der Styroloxide, des Ethylenoxids, Propylenoxids, Tetrahydrofurans, Butylenoxids, Epichlorhydrins, sowie ihre Mischadditions- und Pfropfprodukte, sowie die durch Kondensation von mehrwertigen Alkoholen oder Mischungen derselben und die durch Alkoxylierung von mehrwertigen Alkoholen, Aminen und Aminoalkoholen gewonnenen Polyetherpolyole genannt.

Geeignete hydroxyfunktionelle Polyether weisen OH-Funktionalitäten von 1,5 bis 6,0, bevorzugt 1,8 bis 3,0,

OH-Zahlen von 50 bis 700, bevorzugt von 100 bis 600 mg KOH/g Feststoff und Molekulargewichte $M_n$ von 106 bis 4000 g/mol, bevorzugt von 200 bis 3500 auf, wie z.B. Alkoxylierungsprodukte hydroxyfunktioneller Startermolekuele wie Ethylenglykol, Propylenglykol, Butandiol, Hexandiol, Trimethylolpropan, Glycerin, Pentaerythrit, Sorbit oder Gemische dieser und auch anderer hydroxyfunktioneller Verbindungen mit Propylenoxid oder Butylenoxid. Bevorzugt als Polyetherkomponente sind Polypropylenoxidpolyole, Polyethylenoxidpolyole und Polytetramethylenoxidpolyole.

Gut geeignete Beispiele für Polyesterpolyole sind die an sind die bekannten Polykondensate aus Di- sowie gegebenenfalls Tri,- und Tetraolen und Di- sowie gegebenenfalls Tri- und Tetra)carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopenthylglykolester, wobei die drei letztgenannten Verbindungen bevorzugt sind. Um eine Funktionalität > 2 zu erzielen, können gegebenenfalls Polyole mit einer Funktionalität von 3 anteilig verwendet werden, beispielsweise Trimethylolpropan, Glycerin, Erythrit, Pentaerythrit, Trimethylolbenzol oder Trishydroxyethylisocyanurat.

Als Dicarbonsäuren kommen beispielsweise in Frage Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, 2-Methylbernsteinsäure, 3,3-Diethylglutarsäure, 2,2-Dimethylbernsteinsäure. Anhydride dieser Säuren sind ebenfalls brauchbar, soweit sie existieren. Für die Belange der vorliegenden Erfindung werden die Anhydride infolgedessen durch den Ausdruck "Säure" umfasst. Es können auch Monocarbonsäuren, wie Benzoesäure und Hexancarbonsäure, verwendet werden, vorausgesetzt, dass die mittlere Funktionalität des Polyols ≥2 ist. Gesättigte aliphatische oder aromatische Säuren sind bevorzugt, wie Adipinsäure oder Isophthalsäure. Als gegebenenfalls in kleineren Mengen mitzuverwendende Polycarbonsäure sei hier Trimellitsäure genannt.

Hydroxycarbonsäuren, die als Reaktionsteilnehmer bei der Herstellung eines Polyesterpolyols mit endständigen Hydroxylgruppen mitverwendet werden können sind beispielsweise Hydroxycapronsäure, Hydroxybuttersäure, Hydroxydecansäure, Hydroxystearinsäure und dergleichen. Brauchbare Lactone sind u.a. ε-Caprolacton, Butyrolacton und Homologe.

Bevorzugt sind Polyesterpolyole auf Basis von Butandiol und/oder Neopentylglykol und/oder Hexandiol und/oder Ethylenglykol und/oder Diethylenglykol mit Adipinsäure und/oder Phthalsäure und/oder Isophthalsäure. Besonders bevorzugt sind Polyesterpolyole auf Basis von Butandiol und/oder Neopentylglykol und/oder Hexandiol mit Adipinsäure und/oder Phthalsäure.

Die in Frage kommenden Polycarbonatpolyole sind durch Reaktion von Kohlensäurederivaten, z.B. Diphenylcarbonat, Dimethylcarbonat oder Phosgen mit Diolen erhältlich. Als derartige Diole kommen z.B. Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutlyenglykol, Polybutylenglykole, Bisphenol A, Tetrabrombisphenol A, aber auch Lacton modifizierte Diole in Frage. Bevorzugt enthält die Diolkomponente 40 bis 100 Gew.-% 1,6-Hexandiol und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol ε-Caprolacton oder durch Veretherung von Hexandiol mit sich selbst zum Di- oder Trihexylenglykol erhalten werden. Auch Polyether-Polycarbonatpolyole können eingesetzt werden.

Bevorzugt sind Polycarbonatpolyole auf Basis von Dimethylcarbonat und Hexandiol und/oder Butandiol und/oder ε-Caprolacton. Ganz besonders bevorzugt sind Polycarbonatpolyole auf Basis von Dimethylcarbonat und Hexandiol und/oder ε-Caprolacton.

Anstelle der oben beschriebenen polymeren Polyether-, Polyester- oder Polycarbonatpolyolen kann man auch niedermolekulare Polyole für die Herstellung der isocyanathaltigen Prepolymere verwenden. Geeignete niedermolekulare Polyole sind kurzkettige, d.h. 2 bis 20 Kohlenstoffatome enthaltende, aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Die genannten Polyole können alleine oder in Mischung verwendet werden.

Sowohl bei den Polyisocyanaten (i) als auch den NCO-haltigen Polyurethan-Prepolymeren (ii), wie in Anspruch 2 definiert, können die enthaltenen NCO-Gruppen vollständig oder teilweise mit einem (sekundären) Formamidsilan modifiziert sein, so dass eine Verbindung der Formel (II) entsteht.

Die Silanformamidgruppen-enthaltende Verbindung der Formel (II) weist ein zahlenmittleres Molekulargewicht $M_n$ von kleiner als 10000 g/mol, bevorzugt kleiner als 6000 g/mol und besonders bevorzugt kleiner als 4000 g/mol auf.

Die Isocyanatgruppen der Polyisocyanate (i) oder derjenigen der Polyurethanprepolymere (ii) werden gemäß folgender Reaktionsgleichung mit dem (sekundären) Formamidsilan umgesetzt:

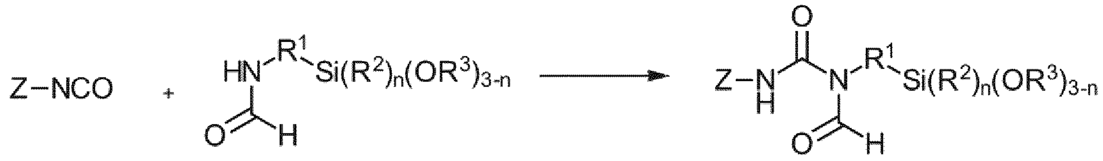

wobei Z, $R^1$, $R^2$, $R^3$ und n wie oben definiert sind.

Bei der Umsetzung des (sekundären) Formamidsilans mit isocyanathaltigen Prepolymeren zur Bildung der Polyurethanprepolymere (ii), wie in Anspruch 2 definiert, können prinzipiell zwei Wege beschritten werden. Es kann zunächst aus einem Polyisocyanat und einem Polyol ein isocyanathaltiges Prepolymer hergestellt werden. Die verbleibenden Isocyanate können im letzten Schritt mit dem (sekundären) Formamidsilan umgesetzt werden. Alternativ kann man auch das Polyisocyanat zuerst mit dem (sekundären) Formamidsilan umsetzen, und die Restisocyanate im zweiten Schritt mit den Hydroxylgruppen des Polyols umsetzen. Das erhaltene Polyurethanprepolymer (ii) kann anschließend gegebenenfalls durch kontinuierliche Destillation, wie z.B. Dünnschichtdestillation, aufgereinigt werden.

**Komponente C - Polyisocyanat**

Als bevorzugte weitere Komponente kann die erfindungsgemäße Beschichtungsmittelzusammensetzung ein oder mehrere silanfreie aliphatische oder cycloaliphatische Polyisocyanate (C) mit freien oder blockierten Isocyanatgruppen enthalten, wie sie üblicherweise in der Lackindustrie eingesetzt werden.

Die Polyisocyanatkomponente (C) ist ein Polyisocyanat mit freien oder blockierten Isocyanatgruppen und mit einem acyclischen, aliphatischen Polyisocyanatgrundkörper und/- oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper.

Die als Grundkörper für die Polyisocyanat-gruppenhaltigen Verbindungen (C) dienenden acyclischen und/oder aliphatischen Polyisocyanate sind bevorzugt an sich bekannte substituierte oder unsubstituierte aliphatische Polyisocyanate. Beispiele für bevorzugte Polyisocyanate sind Tetramethylen-1,4-diisocyanat, Pentan-1,5-diisocyanat, Hexamethylen-1,6-diisocyanat, 2,2,4-Trimethylhexan-1,6-diisocyanat, Ethylendiisocyanat, 1,12-Dodecandiisocyanat, 3-Isocyanatomethyl-3,5,5-trimethylcyclohexylisocyanat (Isophorondiisocyanat, IPDI), Bis-(4-isocyanatocyclohexyl)methan ($H_{12}$MDI) und Mischungen der vorgenannten Polyisocyanate. Weiterhin bevorzugte Polyisocyanatgrundkörper für die Komponente (C) sind die durch Trimerisierung, Dimerisierung, Urethan-, Biuret-, Uretdion- und/oder Allophanatbildung von einem solchen acyclischen aliphatischen Polyisocyanat abgeleiteten Polyisocyanate, insbesondere das Biuret-Dimer und/oder das Allophanat-Dimer und/oder das Isocyanurat-Trimer. In einer weiteren Ausführungsform sind die Polyisocyanatgrundkörper für die Komponente (C) Polyisocyanat-Prepolymerisate mit Urethan-Struktureinheiten, welche durch Umsetzung von Polyolen mit einem stöchiometrischen Überschuss an vorgenannten acyclischen und/oder aliphatischen Polyisocyanaten erhalten werden. Solche Polyisocyanat-Prepolymere sind beispielsweise in US-A 4,598,131 beschrieben.

Besonders bevorzugte Polyisocyanatgrundkörper für die Komponente (C) sind Pentan-1,5-diisocyanat, Hexamethylendiisocyanat und/oder dessen Biuret-Dimer und/oder Allophanat-Dimer und/oder Isocyanurat-Trimer und/oder dessen Uretdion sowie Mischungen der genannten Polyisocyanatgrundkörper.

Ganz besonders bevorzugte Polyisocyanatgrundkörper für die Komponente (C) sind Pentan-1,5-diisocyanat, Hexamethylendiisocyanat und/oder dessen Isocyanurat-Trimer, ggf. zusammen mit dessen Uretdion.

Konkrete Beispiele solcher Polyisocyanate sind die Polyisocyanatharze aus der Desmodur®-Reihe der Fa. Bayer Material Science AG, Leverkusen, DE. Bevorzugt kann z.B. ein niedrigviskoses, aliphatisches Polyisocyanatharz auf Basis von Trimeren des Hexamethylendiisocyanats, wie Desmodur® N 3900 mit einer NCO-Funktionalität von 2.8 bis 3.6 oder Desmodur® N 3300 mit einer NCO-Funktionalität von 2,8 bis 4,5, eingesetzt werden. Gegebenenfalls können diese Polyisocyanate in Mischung mit geeigneten Lösungsmitteln wie z.B. Butylacetat eingesetzt werden, so z.B. mit 10% Butylacetat (Desmodur® N 3390) oder Lösungsmittelgemischen, so z.B. mit 32% Butylacetat/Solventnaphta 100 (Desmodur® N 3368 BA/SN). Alle Desmodur® Produkte sind von Bayer MaterialScience AG, Leverkusen, DE, zu beziehen.

**Komponente D - Katalysator**

Als weitere wesentliche Komponente enthält die erfindungsgemäße Beschichtungsmittelzusammensetzung einen Katalysator (oder "Härter" oder "Aktivator"), der die Hydrolyse und Kondensation der Silanolgruppen der Komponente (B) beschleunigt. Derartige Katalysatoren sind einem Fachmann bekannt. Es können beispielsweise Säuren, wie z. B. Schwefelsäure, p-Toluolsulfonsäure, Trifluormethansulfonsäure, Essigsäure, Trifluoressigsäure, und Dibutylphosphat, Basen, wie z. B. N-substituierte Amidine, wie 1,5-Diaza- bicyclo-[4.3.0]non-5-en (DBN) und 1,5-Diazabicyclo[5.4.0] undec-7-en (DBU), aber auch Metallsalze und -chelate, wie z. B. Tetraisopropyltitanat, Tetrabutyltitanat, Titan(IV)acetylacetonat, Aluminium-tri-sec-butylat, Aluminiumacetylacetonat, Aluminiumtriflat oder Zinntriflat, verwendet werden.

Ebenfalls verwendbar sind Katalysatoren auf Aluminiumoxidbasis. Ein bevorzugter Katalysator ist z.B. X-add® KR 9006 von Nano-X GmbH, Saarbrücken. Ein weiterer bevorzugter Katalysator kann aus der Gruppe bestehend aus Tetraalkylammoniumsalzen organischer Säuren ausgewählt werden, insbesondere Tetrabutylammoniumbenzoat.

Diese Katalysatoren kommen in Mengen von 0.02 bis zu 5 Gew.-%, vorzugsweise bis zu 2 Gew.-%, stärker bevorzugt von 0.05 bis zu 1.5 Gew.-%, bezogen auf das Gewicht der eingesetzten silanmodifizierten Formamide (B) zum Einsatz. In Abhängigkeit von der Art und Menge des eingesetzten Katalysators kann die Aushärtung der erfindungsgemäßen Beschichtungsmittelzusammensetzung über einen weiten Temperaturbereich, beispielsweise von -20 bis 200°C, vorzugsweise von 0 bis 180°C, stärker bevorzugt von 20 bis 160°C und besonders bevorzugt von 100-150°C (bei der Automobilerstlackierung) oder von 20-60°C (bei der Automobilreparaturlackierung), erfolgen. Bei hoher Temperatur kann weniger Katalysator eingesetzt werden, während bei niedriger Temperatur mehr und/oder aktivere Katalysatoren benötigt werden.

**Komponente E - Oberflächenadditive**

Als bevorzugte weitere Komponente kann die erfindungsgemäße Beschichtungsmittelzusammensetzung ein oder mehrere Oberflächenadditive enthalten. Solche Additive können insbesondere zur Verbesserung der Benetzbarkeit hydrophober Oberflächen und als Verlaufsmittel dienen. Vorzugsweise werden für den vorliegenden Anwendungszweck Siloxane eingesetzt. Ein besonders bevorzugtes Oberflächenadditiv (Verlaufsmittel) ist ein polyethermodifiziertes Polydimethylsiloxan wie z.B. Byk® 331 von der Fa. Byk-Chemie GmbH, Wesel, DE. Des Weiteren können Typen wie BYK® 306 oder BYK® 141 der Fa. Byk GmbH eingesetzt werden, TegoGlide® 440 der Fa. Evonik Industries AG, Essen, DE, oder Baysilone® OL 17 der Fa. OMG Borchers GmbH, Langenfeld, DE.

**Komponente F - Lösungsmittel**

Als weitere Komponente kann die erfindungsgemäße Beschichtungsmittelzusammensetzung ein oder mehrere Lösungsmittel enthalten. Sie dienen insbesondere dazu, die Viskosität der Beschichtungsmittelzusammensetzung im gewünschten Bereich einzustellen. Die Lösungsmittel sind in der Regel organische, wasserfreie Lösungsmittel, die mit den anderen Komponenten der erfindungsgemäßen Beschichtungsmittelzusammensetzung kompatibel sind. Beispiele solcher Lösungsmittel sind z.B. Solvent-Naphta(SN), 1-Methoxypropylacetat-2 (MPA), Butylacetat (BA) und Gemische dieser Lösungsmittel.

**Weitere Additive**

Neben den Komponenten (A) bis (F) kann die erfindungsgemäße Beschichtungsmittelzusammensetzung auch je nach Anwendungszweck und der konkreten chemischen Beschaffenheit noch weitere Komponenten enthalten, beispielsweise Füllstoffe, Slip-Additive, Hydrophobierungsmittel, Flammschutzmittel, Stabilisatoren, Lichtschutzmittel wie UV-Absorber und sterisch gehinderte Amine (HALS), weiterhin Antioxidantien, sowie Lackhilfsmittel, z.B. Antiabsetzmittel, Entschäumungs- und/oder Netzmittel, Verlaufmittel, Reaktivverdünner, Weichmacher, Hilfslösemittel und/oder Verdicker sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996

Als geeignete Füllstoffe seien beispielhaft Fällungskieselsäuren und pyrogene Kieselsäuren genannt.

**Bevorzugte erfindungsgemäße Ausführungsformen**

Nachfolgend werden bevorzugte Ausführungsformen im Detail beschrieben.

In einer bevorzugten Ausführungsform haben die in den erfindungsgemäßen Beschichtungsmittelzusammensetzungen verwendeten STP die allgemeine Formel (II):

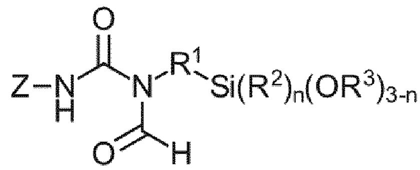

,

wobei in der Formel (II) gilt:

Z steht für einen Molekülrest, der aus einem (i) Polyisocyanat oder (ii) einem NCO-haltigen Polyurethanprepolymer besteht, wobei in (i) oder (ii) pro Molekül mindestens eine NCO-Gruppe der genannten Strukturen mit einem sekundären Formamidsilan modifiziert ist, so dass eine Verbindung der Formel (II) entsteht;

$R^1$ stellt eine mindestens zweiwertige, gegebenenfalls substituierte, lineare oder verzweigte, aliphatische und/oder alizyklische Struktureinheit mit 1 bis 12 Kohlenstoffatomen, vorzugsweise 1-6 Kohlenstoffatomen und stärker bevorzugt 1-3 Kohlenstoffatomen dar, wobei ein oder mehrere nicht benachbarte Methylengruppen jeweils durch O oder S ersetzt sein können;

$R^2$ und $R^3$ stellen jeweils unabhängig voneinander eine gegebenenfalls substituierte, lineare oder verzweigte, aliphatische und/oder alizyklische Gruppe mit 1 bis 12, vorzugsweise 1, 2 oder 3, Kohlenstoffatomen dar; und

n stellt eine ganze Zahl von 0 bis 2, insbesondere 0, dar;

***Polyisocyanate (i)***

In einer besonders bevorzugten Ausführungsform handelt es sich bei der Struktureinheit Z um einen Rest, der sich von einem Polyisocyanat ableitet. Als geeignete Polyisocyanate finden die dem Fachmann an sich bekannten aliphatischen oder cycloaliphatischen Polyisocyanate einer NCO-Funktionalität von bevorzugt ≥ 2 Verwendung. Diese können auch Uretdion-, Urethan-, Allophanat-, Isocyanurat-, Iminooxadiazindion- und/oder Biuret-Strukturen aufweisen.

Die vorstehend genannten Polyisocyanate basieren dabei auf dem Fachmann an sich bekannten Di- bzw. Triisocyanaten mit aliphatisch und/oder cycloaliphatisch gebundenen Isocyanatgruppen, wobei es unerheblich ist, ob diese unter Verwendung von Phosgen oder nach phosgenfreien Verfahren hergestellt wurden. Beispiele für solche Di- bzw. Triisocyanate sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Bayer AG, Leverkusen, DE), 4-Isocyanatomethyl-1,8-octandiisocyanat (Triisocyanatononan, TIN), Diisocyanato-1,3-dimethylcyclohexan (H6XDI), 1-Isocyanato-1-methyl-3 -isocyanatomethylcyclohexan, 1-Isocyanato-1-methyl-4-isocyanatomethylcyclohexan, Bis-(isocyanatomethyl)-norbornan, sowie beliebige Mischungen genannter Verbindungen.

Besonders bevorzugt weisen die Polyisocyanate dabei eine mittlere NCO-Funktionalität von 2,0 bis 5,0, ganz besonders bevorzugt von 2,3 bis 4,5 und bevorzugt einen Gehalt an Isocyanatgruppen von 5,0 bis 50,0 Gew.-%, besonders bevorzugt von 5,0 bis 30,0 Gew.-%, auf.

Besonders bevorzugt basieren die Polyisocyanate der vorstehend genannten Art auf Pentandiisocyanat, Hexamethylendiisocyanat, Isophorondiisocyanat, den isomeren Bis-(4,4'-isocyanatocyclohexyl)methanen, deren Mischungen sowie Uretdion-Dimeren, Isocyanurat- und Iminooxadiazindiontrimeren aus diesen Polyisocyanaten.

Die silanmodifizierten Verbindungen der Formel (II), wobei Z sich von einem Polyisocyanat (i) ableitet, können vorteilhaft nach dem folgenden zweistufigen Verfahren hergestellt werden:

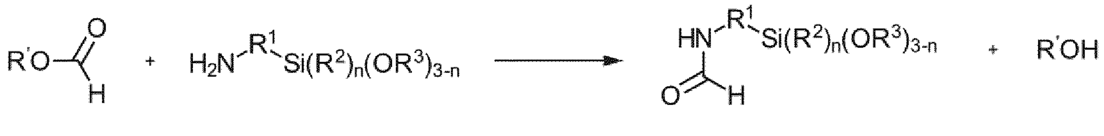

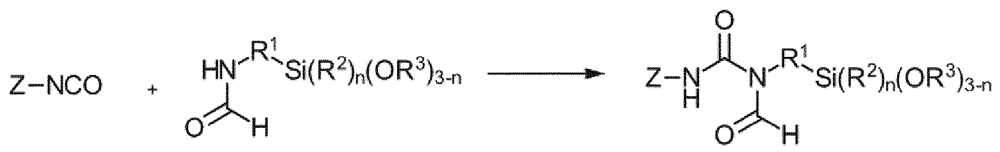

Zunächst wird bevorzugt ein Überschuss des Ameisensäurealkylesters R'O-CHO zum Amin $H_2N-R^1-Si(R_2)_n(OR_3)_{3-n}$ getropft, wobei R' bevorzugt eine Alkylgruppe mit 1 bis 4 Kohlenstoffatomen darstellt und $R^1$, $R^2$, $R^3$ und n wie oben definiert sind. Besonders bevorzugt ist als Ameisensäurealkylester R'O-CHO Methylformiat oder Ethylformiat. Bevorzugt wird 1 Mol Amin mit einem Überschuss von 1,01 bis 6 Mol Ameisensäurealkylester R'O-CHO, besonders bevorzugt 1,05 bis 4 Mol, bei der Siedetemperatur des Ameisensäureethylesters umgesetzt. Nach beendeter Reaktion wird der überschüssige Ameisensäurealkylester R'O-CHO und der entstandene Alkohol R'-OH mittels Dünnschicht-Destillation abdestilliert und das entstanden (sekundäre) Formamidsilan $OHC-HN-R^1-Si(R_2)_n(OR_3)_{3-n}$ gegebenenfalls abfiltriert.

Im Anschluss wird das (sekundäre) Formamidsilan mit einem Polyisocyanat der Formel Z-NCO, bevorzugt unter inerten Bedingungen, bei Temperaturen von 20 bis 200° C, vorzugsweise 40 bis 160° C, umgesetzt. Dabei werden die beiden Komponenten in einem Äquivalentverhältnis von Isocyanatgruppen zu Formamidgruppen von mindestens 1 : 10 bis höchstens 40 : 1, bevorzugt von 1 : 5 bis höchstens 30 : 1 und besonders bevorzugt von 1 : 2 bis höchstens 25 : 1 eingesetzt. Die Umsetzung kann in Lösung oder lösemittelfrei in Substanz ausgeführt werden. Je nach der Stöchiometrie der Reaktion kann das (tertiäre) Formamidsilangruppen-haltige Produkt der Formel (II) noch freie Isocyanatgruppen enthalten.

Die Herstellung der Verbindungen mit der Formel (II), wobei Z ein (i) Polyisocyanat ist, kann ohne den Einsatz von Katalysatoren durchgeführt werden. Gegebenenfalls können zur Beschleunigung der Umsetzung aber auch bekannte Katalysatoren hinzugegeben werden. Beispielsweise können tert. Amine, wie z. B. Triethylamin, Tributylamin, Dicyclohexylmethylamin, Dimethyl-cyclohexylamin, N,N,N',N'-Tetramethyldiaminodiethylether, Bis-(dimethylaminopropyl)-harnstoff, N-Methyl- bzw. N- Ethylmorpholin, N-Cocomorpholin, N-Cyclohexylmorpholin, N,N,N',N'-Tetramethylethylendiamin, N,N,N',N'-Tetramethy-1,3-butandiamin, N,N,N',N'-Tetramethyl-1,6-hexandiamin, Pentamethyldiethylentriamin, N-Methylpiperidin, N-Dimethyl-aminoethylpiperidin, N,N'-Dimethylpiperazin, N-Methyl-N'-dimethylaminopiperazin, 1,2-Dimethylimidazol, 2-Methylimidazol, N,N-Dimethylimidazol-ß-phenylethylamin, 1,4-Diazabicyclo-(2,2,2)-octan (DABCO) und Bis-(N,N-dimethylaminoethyl)adipat, Amidine, wie z. B. 1,5-Diazabicyclo[4.3.0]nonen (DBN), 1,8-Diazabicyclo(5.4.0)undecen-7 (DBU) und 2,3-Dimethyl-3,4,5,6-tetrahydropyrimidin, Alkanolaminverbindungen, wie z. B. Triethanolamin, Triisopropanolamin, N-Methyldiethanolamin, N- Ethyl-diethanolamin, Dimethylaminoethanol und 2-(N,N-Dimethylaminoethoxy)ethanol, N,N',N"- Tris-(dialkylaminoalkyl)hexahydrotriazine, wie z.B. N,N',N"-Tris-(dimethylaminopropyl)-s-hexahydrotriazin, Bis(dimethylaminoethyl)ether sowie Metallsalze, wie z. B. anorganische und/oder organische Verbindungen des Eisens, Bleis, Wismuts, Zinks, und/oder Zinns in üblichen Oxidationsstufen des Metalls, beispielsweise Eisen(II)-chlorid, Eisen(III)-chlorid, Wismut(III)-Wismut(III)-2-ethylhexanoat, Wismut(III)-octoat, Wismut(III)-neodecanoat, Zinkchlorid, Zink-2-ethylcaproat, Zink(II)-trifluoromethansulfonat (Zinktriflat), Zinn(II)-octoat, Zinn(II)-ethylcaproat, Zinn(II)-palmitat, Dibutylzinn(IV)-dilaurat (DBTL), Dibutylzinn(IV)-dichlorid oder Bleioctoat, eingesetzt werden.

Bevorzugte einzusetzende Katalysatoren sind tertiäre Amine, Amidine und Zinnverbindungen bzw. Zinkverbindungen der genannten Art. Besonders bevorzugte Katalysatoren sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU) sowie Dibutylzinn(IV)- dilaurat (DBTL) und Zink-(II)trifluoromethansulfonat (Zinktriflat).

Die oben beispielhaft genannten Katalysatoren können bei der Umsetzung einzeln oder in Form beliebiger Mischungen eingesetzt werden und kommen dabei, falls überhaupt, in Mengen von 0,001 bis 1,0 Gew.-%, bevorzugt 0,01 bis 0,5 Gew.-%, berechnet als Gesamtmenge an eingesetzten Katalysatoren, bezogen auf die Gesamtmenge der verwendeten Ausgangsverbindungen, zum Einsatz.

Der Verlauf der Umsetzung kann durch z. B. titrimetrische Bestimmung des NCO-Gehalts verfolgt werden. Nach Erreichen des angestrebten NCO-Gehalts wird die Reaktion abgebrochen.

Die so hergestellten, silanmodifizierten Verbindungen der Formel (II), wobei Z sich von einem Polyisocyanat (i) ableitet, stellen klare, praktisch farblose Produkte dar, die in Abhängigkeit vom gewählten Ausgangsmaterialien niedrig- bis hochviskose Flüssigkeiten darstellen und Restgehalte an monomeren Ausgangsdiisocyanaten von weniger als 1,0 Gew.-%, vorzugsweise von weniger als 0,5 Gew.-%, besonders bevorzugt von weniger als 0,3 Gew.-%, bezogen auf die Gesamtmasse des Reaktionsproduktes, aufweisen.

Eventuell noch nachweisbare NCO-Restgehalte können durch Zugabe von Methanol abgefangen werden.

Um ein vorzeitige Vernetzung der Silangruppen der Verbindungen der Formel (II) während der erfindungsgemäßen Herstellung zu unterbinden, kann der Zusatz von Wasserfängern vorteilhaft sein. Beispielsweise können ortho-Ameisenestern, wie z. B. Triethylorthoformiat, Vinylsilanen, wie z. B. Vinyltrimethoxysilan, oder organischen Phosphaten,

wie z. B. Dibutylphosphat, eingesetzt werden. Die Wasserfänger kommen, falls notwendig, in Mengen von bis zu 5 Gew.-%, vorzugsweise bis zu 2 Gew.-%, bezogen auf die Gesamtmenge der Ausgangsmaterialien, zum Einsatz.

Falls Katalysatoren und/oder Wasserfänger eingesetzt werden, können diese den Ausgangsverbindungen bereits vor Beginn der eigentlichen Umsetzung zugesetzt werden. Es ist aber auch möglich, diese Hilfsmittel dem Reaktionsgemisch zu einem beliebigen Zeitpunkt während der Umsetzung zuzusetzen.

In einer bevorzugten Ausführungsform findet das hier beschriebene Verfahren unter Schutzgasatmosphäre, wie beispielsweise Stickstoff, statt.

### *NCO-haltiges Polyurethanprepolymer (ii)*

In einer weiteren Ausführungsform handelt es sich bei der Struktureinheit Y um einen Rest, der sich von einem Isocyanatgruppen tragenden Prepolymer ableitet. Dies kann insbesondere ein Polyurethanprepolymer sein. Die erfindungsgemäße Herstellung des Isocyanatgruppen tragenden Polyurethanprepolymer Y-NCO beinhaltet die Umsetzung von einem oder mehrerer bereits genannter Polyisocyanate mit einem oder mehrerer Polyole.

Die Herstellung der erfindungsgemäßen silanmodizierten Verbindungen der Formel (II), wobei Z sich von einem NCO-haltigen Polyurethanprepolymer (ii) ableitet, erfolgt grundsätzlich in aus der Polyurethanchemie bekannter Art und Weise. Dabei werden die Polyole (einzeln oder als Mischung) mit einem Überschuß des Polyisocyanats (einzeln oder als Mischung) gegebenenfalls in Anwesenheit eines Katalysators und/oder von Hilfs- und Zusatzstoffen umgesetzt. Das homogene Reaktionsgemisch wird bis zum Erhalt eines konstanten NCO-Wertes gerührt. Anschließend kann gegebenenfalls unreagiertes Polyisocyanat durch kontinuierliche Destillation entfernt werden. In den erfindungsgemäßen Beispielen wird ein Prepolymer beschrieben, welches ohne weitere Abtrennung von monomeren Polyisocyanaten weiter verwendet wird.

Unter einem kontinuierlichem Destillationsverfahren wird hier ein Verfahren verstanden, bei dem nur eine jeweilige Teilmenge des Prepolymers aus dem zuvor beschriebenen Verfahrensschritt kurzzeitig einer erhöhten Temperatur ausgesetzt wird, während die noch nicht im Destillationsprozess befindliche Menge bei einer deutlich niedrigeren Temperatur verbleibt. Als erhöhte Temperatur ist dabei die zur Verdampfung der flüchtigen Bestandteile bei einem entsprechend gewählten Druck notwendige Temperatur zu verstehen.

Bevorzugt wird die Destillation bei einer Temperatur von weniger als 170°C, besonders bevorzugt 110 bis 170°C, ganz besonders bevorzugt 125 bis 145°C und bei Drücken von weniger als 20 mbar, besonders bevorzugt weniger als 10 mbar, ganz besonders bevorzugt bei 0,05 bis 5 mbar durchgeführt.

Bevorzugt beträgt die Temperatur der noch nicht im Destillationsprozess befindlichen Menge der prepolymerhaltigen Reaktionsmischung 0° bis 60°C, besonders bevorzugt 15° bis 40°C und ganz besonders bevorzugt 20° bis 40°C.

Vorzugsweise beträgt der Temperaturunterschied zwischen der Destillationstemperatur und der Temperatur der noch nicht im Destillationsprozess befindlichen Menge der prepolymerhaltigen Reaktionsmischung mindestens 5°C, besonders bevorzugt mindestens 15°C, ganz besonders bevorzugt 15° bis 40°C.

Bevorzugt wird die Destillation mit solch einer Geschwindigkeit geführt, dass ein Volumeninkrement der zu destillierenden prepolymerhaltigen Reaktionsmischung weniger als 10 min, besonders bevorzugt weniger als 5 min der Destillationstemperatur ausgesetzt wird und anschließend gegebenenfalls durch aktive Kühlung wieder auf die Ausgangstemperatur der prepolymerhaltigen Reaktionsmischung vor der Destillation gebracht wird. Bevorzugt ist die dabei durchlaufene Temperaturbelastung derart, dass die Temperatur der Reaktionsmischung vor der Destillation bzw. des Prepolymers nach der Destillation gegenüber der angewandten Destillationstemperatur mindestens 5°C, besonders bevorzugt mindestens 15°C, ganz besonders bevorzugt 15° bis 40°C höher ist.

Bevorzugte kontinuierliche Destillationstechniken sind die Kurzweg-, Fallfilm- und/oder Dünnschichtdestillation (siehe hierzu beispielsweise Chemische Technik, Wiley-VCH, Band 1, 5. Auflage, Seiten 333-334).

Bevorzugt wird als kontinuierliche Destillationstechnik die Dünnschichtdestillation mit den vorstehend genannten Parametern eingesetzt.

Das Verfahren zur Herstellung des NCO-haltigen Polyurethanprepolymers kann unkatalysiert durchgeführt werden. Zur Beschleunigung der Urethanisierungsreaktion können gegebenenfalls aber auch in der Isocyanatchemie übliche Katalysatoren mitverwendet werden. Geeignete Katalysatoren wurden bereits oben zur Herstellung beschrieben.

Besonders bevorzugte Katalysatoren sind 1,4-Diazabicyclo-(2,2,2)-octan (DABCO), 1,5-Diazabicyclo[4.3.0]nonen (DBN), 1,8-Diazabicyclo(5.4.0)undecen-7 (DBU) sowie Dibutylzinn(IV)dilaurat (DBTL).

Das so erhaltene NCO-haltige Polyurethanprepolymer kann dann in einem zweiten Schritt mit dem oben beschriebenen (sekundären) Formamidsilan $OHC\text{-}HN\text{-}R^1\text{-}Si(R^2)_n(OR^3)_{3-n}$ umgesetzt werden, wobei hier auf das oben beschriebene Verfahren zur Herstellung der Formamidsilan-modifizierten Polyisocyanate verwiesen wird.

In einer alternativen Fahrweise kann man auch das (sekundären) Formamidsilan $OHC\text{-}HN\text{-}R^1\text{-}Si(R^2)_n(OR^3)_{3-n}$ zunächst mit einem Polyisocyanat umsetzen, wobei nur ein Bruchteil der Isocyanatgruppen umgesetzt wird. Die restlichen Isocyanate werden dann in einem zweiten Schritt mit den oben beschriebenen Polyolen in einer Urethanisierungsreaktion umgesetzt. Die Umsetzung erfolgt bei Temperaturen von 20° bis 200° C, vorzugsweise 40° bis 160° C. Dabei wird ein

Äquivalentverhältnis von Isocyanatgruppen zu Hydroxylgruppen von 0,7 : 1 bis 1,2 : 1, vorzugsweise von 0,8 : 1 bis 1,1 : 1, besonders bevorzugt von 0,9 : 1 bis 1,05 : 1 eingehalten.

***Bevorzugte Substituentenbedeutungen in Formel (I) bzw. Formel (II)***

Bevorzugt sind in der Formel (I) bzw. der Formel (II) die folgenden Substituentenbedeutungen: $R^1$ stellt Methylen ($-CH_2-$), Ethylen oder Propylen (insbesondere n-Propylen, d.h. $-CH_2CH_2CH_2-$) , dar; $R^2$ und $R^3$ stellen jeweils unabhängig voneinander -Methyl oder - Ethyl, bevorzugt -Methyl, dar, und n stellt eine ganze Zahl von 0 bis 2 dar, vorzugsweise ist n Null.

Besonders bevorzugt sind in der Formel (I) bzw. der Formel (II) die folgenden Substituentenbedeutungen: $R^1$ stellt n-Propylen dar; $R^2$ und $R^3$ stellen jeweils unabhängig voneinander -Methyl oder -Ethyl dar; und n stellt eine ganze Zahl von 0 bis 2 dar.

**Applikation und Substrate**

Die erfindungsgemäßen Beschichtungsmittelzusammensetzungen werden naturgemäß zur Beschichtung von Substraten verwendet. Insbesondere kommen sie bei der Kfz-Lackierung und vorzugsweise bei der Automobilerstlackierung zum Einsatz.

Üblicherweise werden 2-Komponenten-Lacke hergestellt, die unmittelbar vor dem Lackieren gemischt werden. Insbesondere soll dadurch vermieden werden, dass das Silan schon im Vorfeld mit OH-Gruppen reagieren kann, was zu Hydrolyse führt.

Die Automobilerstlackierung erfolgt üblicherweise bei Raumtemperatur, gefolgt von einem Einbrennvorgang im Hochtemperaturbereich (120° bis 140°C). Die erfindungsgemäße Beschichtungsmittelzusammensetzung wird dabei vorzugsweise durch elektrostatische Spritzapplikation aufgebracht: Bei diesem Verfahren wird sowohl die Karosse als auch der aufzubringende Lack elektrostatisch aufgeladen. Die Applikation im Automobilwerk erfolgt dann üblicherweise mittels Robotern mit Hochrotationsglocken, die extrem kleine Tröpfchen erzeugen, die dann als Lack verlaufen.

Es ist aber auch möglich, erfindungsgemäße Beschichtungsmittelzusammensetzungen zur Reparaturlackierung zu verwenden. Diese erfolgt typischerweise durch Fließbecherapplikation mit Lenkluft und anschließender Niedertemperaturtrockung (Raumtemperatur bis 60°C über einen Zeitraum von 1 bis 3 h). Voraussetzung dafür ist eine reaktivere Beschichtungsmittelzusammensetzung, wobei die Reaktivität z.B. durch mehr Katalysator und aktivere Katalysatoren, und durch die Verwendung rasch hydrolysierbarer Silanolschutzgruppen (insbesondere Methoxygruppen) gesteigert werden kann.

Die erfindungsgemäßen Beschichtungsmittel lassen sich ferner durch die üblichen Techniken auf unterschiedlichste Substrate applizieren, wie beispielsweise durch Spritzen, Walzen, Rakeln, Gießen, Sprühen, Streichen, Tränken, Tauchen oder durch Druck-Techniken wie Sieb-, Tief-, Flexo- oder Offsetdruck sowie durch Transfer-Methoden. Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) bzw. Blocks und Blends dieser Kunststoffe, Papier, Leder, Textilien, Filz, Glas, Holz, Holzwerkstoffe, Kork, anorganisch gebundene Substrate wie Holz- und Faserzementplatten elektronische Baugruppen oder mineralische Untergründe. Wärmeempfindliche Substrate können nicht mit hohen Temperaturen behandelt werden und erfordern daher eine Aushärtung im Niedertemperaturbereich (Raumtemperatur bis ca. 50°C oder 80°C) und daher eine entsprechend reaktive Beschichtungsmittelzusammensetzung.

Es können auch Substrate, die aus verschiedenen der vorgenannten Materialien bestehen, oder bereits beschichtete Substrate lackiert werden. Es ist auch möglich die Beschichtungsmittel nur temporär auf ein Substrat aufzubringen, dann teilweise oder vollständig zu härten und wieder abzulösen, um z.B. Folien herzustellen. Insbesondere eignen sich die erfindungsgemäßen Beschichtungsmittel für den Einsatz bei der Lackierung von Fahrzeugen, insbesondere Automobilkarossen oder Anbauteilen, bevorzugt in Form von Klarlacken.

Die applizierten Schichtdicken (vor der Härtung) liegen typischerweise zwischen 0,5 und 5000 $\mu$m, bevorzugt zwischen 5 und 1500 $\mu$m, besonders bevorzugt zwischen 15 und 1000 $\mu$m.

Geeignete Metallsubstrate können im Allgemeinen aus allen auf dem Gebiet üblichen Metallen bzw. Metalllegierungen gefertigt werden. Bevorzugt kommen Metalle, wie zum Beispiel Aluminium, Edelstahl, Stahl, Titan, eisenhaltige Metalle und Legierungen zum Einsatz, wie sie insbesondere im Automobilbau üblich sind.

Die Substrate sind ihrerseits typischerweise vorlackiert, und zwar normalerweise zunächst mit einem Elektrotauchlack, einem Füller (Hydrofüller oder Lösemittelfüller - es gibt aber auch füllerfreie Systeme) und mit einem Basislack. Falls das erfindungsgemäße Beschichtungsmittel ein pigmentierter Decklack ist, entfällt ggf. der Basislackauftrag. Gegebenenfalls kann es auch erforderlich oder zumindest zweckmäßig sein, die Oberflächen der zu beschichtenden Substrate durch ein physikalisches, chemisches und/oder physikalischchemisches Verfahren vorzubehandeln, z.B. durch Phosphatierung oder (im Fall des Refinishing) durch Anschleifen.

Weiterhin können die zu beschichtenden Substrate jede beliebige Form besitzen, die für die jeweilige Anwendung notwendig ist. Das heißt, es können beliebige dreidimensionale Substrate mit der erfindungsgemäßen, nichtwässrigen Beschichtungsmittelzusammensetzung lackiert werden, insbesondere und vorzugsweise Automobilkarosserien oder Teile davon.

**Experimenteller Teil**

Die nachfolgenden Beispiele dienen zur Verdeutlichung der vorliegenden Erfindung, sollen aber keinesfalls als Einschränkung des Schutzbereichs verstanden werden.

Alle Prozentangaben beziehen sich, soweit nichts anderes angegeben wird, auf das Gewicht.

Die Bestimmung der NCO-Gehalte erfolgte titrimetrisch nach DIN EN ISO 11909.

OH-Zahlen wurden titrimetrisch nach DIN 53240-2: 2007-11, Säure-Zahlen nach DIN 3682 5 bestimmt. Die angegebenen OH-Gehalte wurden aus den analytisch ermittelten OH-Zahlen errechnet.

Die Rest-Monomeren Gehalte wurden nach DIN EN ISO 10283 gaschromatographisch mit internem Standard gemessen.

Molekulargewichte wurden durch Gelpermationschromatographie nach DIN 55672-1 (Gelpermeationschromatographie (GPC) - Teil 1: Tetrahydrofuran (THF) als Elutionsmittel) gegen Polystyrolstandards ermittelt, mit der Änderung, dass mit einer Flussrate von 0,6 ml/min statt 1,0 ml/min gearbeitet wurde.

Sämtliche Viskositätsmessungen erfolgten mit einem Physica MCR 51 Rheometer der Fa. Anton Paar Germany GmbH (DE) nach DIN EN ISO 3219.

Verkratzung: Die Prüfung der Verkratzung erfolgte im Komplettaufbau. Hierzu wurde vor Applikation des Klarlackes das Plattenmaterial mit einem 1K-OEM-Hydrofüller und einem 1K-OEM-Hydrobasislack beschichtet. Der Füller wurde 20 Minuten bei 165°C eingebrannt, der Basislack wurde 10 Minuten bei 80°C abgelüftet bzw. vorgetrocknet. Anschließend wurde der Klarlack aufgetragen und 30 min lang bei 140°C eingebrannt.

Pendeldämpfung: Die Messung der Pendeldämpfung erfolgte nach DIN EN ISO 1522 auf einer Glasplatte und wird nach König bestimmt.

Lösemittelbeständigkeit: Dazu wurde eine kleine Menge der entsprechenden Lösemittel (Xylol, 1-Methoxypropylacetat-2, Ethylacetat oder Aceton) in ein Reagenzglas gegeben und mit einem Wattebausch an der Öffnung versehen, so dass eine mit Lösemittel gesättigte Atmosphäre innerhalb des Reagenzglases entstand. Die Reagenzgläser wurden anschlie-ßend mit dem Wattebausch auf die Lackoberfläche gebracht und verblieben dort für 5 Min. Nach Abwischen des Lösemittels wurde der Film auf Zerstörung/Erweichung/Haftverlust geprüft. (0= keine Veränderung, 5= Film zerstört)

Nasskratzbeständigkeit: Die Nasskratzbeständigkeit wurde mittels einer Labor-Waschanlage nach DIN EN ISO 20566 geprüft. Angegeben wird der Glanzverlust in Gloss Units (GU) nach Verkratzung (10 Zyklen). Die Glanzmessung erfolgte reflektometrisch. Je geringer der Glanzverlust in GU, desto widerstandsfähiger ist die Beschichtung gegen Nassverkratzung.

Trockenkratzbeständigkeit: Die flache Seite eines Hammers (Gewicht 800g) wurde mit Stahlwolle oder Polishing Paper bespannt. Der Hammer wurde vorsichtig im rechten Winkel auf die Beschichtung aufgesetzt und, ohne zu verkanten und ohne zusätzliche Körperkraft, in einer Spur gleichmäßig über die Beschichtung geführt. Es wurden 10 Doppelhübe ausgeführt. Der Restglanz wurde an 3 verschiedenen Stellen quer zur Verkratzungsrichtung gemessen. Die Glanzmessung erfolgte reflektometrisch. Je geringer der Glanzverlust in GU, desto widerstandsfähiger ist die Beschichtung gegen Nassverkratzung.

**Synthesebeispiele**

***Synthese der sekundären Formamidsilane als Vorläuferverbindungen***

**Synthesebeispiel 1: N-(3-Trimethoxysilylpropyl)formamid**

In einem Kolben mit Thermometer, KPG-Rührer, Rückflusskühler und Tropftrichter werden unter Stickstoffatmosphäre bei Raumtemperatur 1075,8 g (6 mol) 3-Aminopropyltrimethoxysilan vorgelegt. Unter Rühren werden 378,6 g (6,3 mol) Methylformiat zugetropft, so dass 50°C nicht überschritten werden. Nach Abklingen der Exothermie wird 4 Stunden bei Raumtemperatur nachgerührt und anschließend unter reduziertem Druck (0,1 mbar bei 50°C) das überschüssige Methylformiat und der entstandene Methylalkohol abdestilliert. Man erhält eine farblose Flüssigkeit mit einer Viskosität von 11 mPa·s bei 23°C.

**Synthesebeispiel 2: N-(3-Methyldimethoxysilylpropyl)formamid**

In einem Kolben mit Thermometer, KPG-Rührer, Rückflusskühler und Tropftrichter werden unter Stickstoffatmosphäre bei Raumtemperatur 99,6 g (0,6 mol) 3-Aminopropylmethyldimethoxysilan vorgelegt. Unter Rühren werden 40,3 g (0,67 mol) Methylformiat zugetropft, so dass 50°C nicht überschritten werden. Nach Abklingen der Exothermie werden 4 Stunden bei Raumtemperatur nachgerührt und anschließend unter reduziertem Druck (0,1 mbar bei 50°C) das überschüssige Methylformiat und der entstandene Methylalkohol abdestilliert. Man erhält eine farblose Flüssigkeit.

**Synthesebeispiel 3: N-(3-Triethoxysilylpropyl)formamid**

In einem Kolben mit Thermometer, KPG-Rührer, Rückflusskühler und Tropftrichter werden unter Stickstoffatmosphäre bei Raumtemperatur 221,4 g (1 mol) 3-Aminopropyltriethoxysilan vorgelegt. Unter Rühren werden 77,8 g (1,05 mol) Ethylformiat zugetropft, so dass 50°C nicht überschritten werden. Nach Abklingen der Exothermie wird 4 Stunden bei Raumtemperatur nachgerührt und anschließend unter reduziertem Druck (0,1 mbar bei 80°C) das überschüssige Ethylformiat und der entstandene Ethylalkohol abdestilliert. Man erhält eine farblose Flüssigkeit mit einer Viskosität von 13 mPa·s bei 23°C.

**Synthesebeispiel 4: N-(3-Methyldiethoxysilylpropyl)formamid**

In einem Kolben mit Thermometer, KPG-Rührer, Rückflusskühler und Tropftrichter werden unter Stickstoffatmosphäre bei Raumtemperatur 497,9 g (2,6 mol) 3-Aminopropylmethyldiethoxysilan vorgelegt. Unter Rühren werden 212,1 g (2,8 mol) Ethylformiat zugetropft, so dass 50°C nicht überschritten werden. Nach Abklingen der Exothermie wird 4 Stunden bei Raumtemperatur nachgerührt und anschließend unter reduziertem Druck (0,1 mbar bei 80°C) das überschüssige Ethylformiat und der entstandene Ethylalkohol abdestilliert. Man erhält eine farblose Flüssigkeit mit einer Viskosität 12 mPas bei 23°C.

***Synthese der silanmodifizierten, mindestens eine tertiäre Formamidsilangrunne enthaltenden Verbindungen der allgemeinen Formel (I) bzw. (II):***

**Synthesebeispiel 5 -** *NCO-freies STP der Formel (II)*

In einem Kolben mit Thermometer, KPG-Rührer, Rückflusskühler und Tropftrichter wurden unter Stickstoffatmosphäre 201,6 g (1,2 mol) Hexamethylendiisocyanat (HDI) vorgelegt und auf 65° C erwärmt. Man gab 54 mg Zinktrifluormethansulfonat hinzu und tropfte innerhalb von 75 min 248,8 g N-(3-Trimethoxysilylpropyl)formamid (1,2 mol, Herstellung gemäß Synthesebeispiel 1 -) bei 65° C zu. Es wurde insgesamt 12,5 h bei 65° C gerührt, wobei nach 8 h Rührzeit noch 54 mg Zinktrifluormethansulfonat nachgesetzt wurden. Die Konzentration freier Isocyanatgruppen betrug nach Ende der angegebenen Rührzeit 11,1 % (theor. 11,2 %). Die Reaktionsmischung wurde auf 85° C aufgewärmt, und bei dieser Temperatur wurden innerhalb von 1 h 87,6 g (0,6 mol) 2,2,4-Trimethylpentandiol-1,3 zugegeben. Nach 3 h Rührzeit bei 85° C wurden der Reaktionsmischung 230,0 g MPA zugegeben, um die Viskosität der Reaktionsmischung zu erniedrigen. Nach weiteren 5,5 h Nachrührzeit war die Reaktion beendet, da laut IR keine freien NCO-Gruppen mehr nachgewiesen werden konnten. Man erhält eine klare Flüssigkeit mit einem Polymergehalt von 69 % und einer Viskosität von 297 mPas bei 23° C.

Der Gehalt an elementarem Si in dieser Formulierung beträgt 4,4 Gew.-% und ist ein Maß für den Gehalt an vernetzungsfähigen Trimethoxysilangruppen.

**Synthesebeispiel 6** - *NCO-enthaltendes STP der Formel (II)*

In diesem Synthesebeispiel wurden die NCO-Gruppen von Desmodur® N 3900 mit einem Formamidsilan teilweise umgesetzt. Das resultierende STP enthält sowohl NCO-Gruppen als auch Silangruppen und wirkt als Hybridsystem, d.h. es kann sowohl über seine NCO-Gruppen als auch und über seine Silangruppen vernetzen:
In einem Kolben mit Thermometer, KPG-Rührer, Rückflusskühler und Tropftrichter wurden unter Stickstoffatmosphäre 536,2 g Desmodur® N 3900 und 91 mg Zinktrifluormethansulfonat vorgelegt und auf 100° C aufgewärmt. Bei dieser Temperatur wurden innerhalb von 1 h 373,1 g N-(3-Trimethoxysilylpropyl)formamid (1,8 mol, Herstellung gemäß Synthesebeispiel 1) zugetropft. Man rührte bei 100° C weitere 3 h nach, bis der Gehalt freier NCO-Gruppen auf 4,8 % abgefallen war. Der Ansatz wurde mit 114 g Butylacetat und 114 g Solventnaphta 100 versetzt und auf Raumtemperatur abgekühlt.
Man erhielt eine klare Flüssigkeit mit einem Polymergehalt von 80 % und einer Viskosität von 1030 mPas.

Der Gehalt an elementarem Si in dieser Formulierung beträgt 4,4 Gew.-% und ist ein Maß für den Gehalt an

vernetzungsfähigen Trimethoxysilangruppen.

**Synthesebeispiel 7:** Vergleichsbeispiel zu Synthesebeispiel 5 - nicht erfindungsgemäß *NCO-freies STP der Formel (II): Verwendung von 1-Mercaptopropyl-3-trimethoxysilan anstelle des erfindungsgemäßen (sekundären) Formamidsilans des Synthesebeispiels 1*

In einem Kolben mit Thermometer, KPG-Rührer, Rückflusskühler und Tropftrichter wurden unter Stickstoffatmosphäre 604,8 g Hexamethylendiisocyanat (3,6 mol) vorgelegt und auf 85° C erwärmt. Bei dieser Temperatur wurden innerhalb von 1 h 262,8 g 2,2,4-Trimethyl-1,3-pentandiol /1,8 mol) portionsweise zugegeben, bis die Reaktionsmischung einen Isocyanatgruppengehalt von 17,1 Gew.-% enthielt. Das Reaktionsgemisch wurde mit 230,0 g 1-Methoxy-2-propylacetat (MPA) verdünnt und auf 55° C gestellt. Bei dieser Temperatur gab man zunächst 160 mg 1,4-Diazabicyclo[2.2.2]octan (DABCO) zum Reaktionsgemisch, danach wurden bei einer Temperatur von 50°-55° C 759,9 g 3-Mercaptopropyltrimethoxysilan (95 %ig, 3,68 mol) zur Reaktionsmischung. Es wurden 4,5 Stunden bei 50° C nachgerührt, bis der Gehalt der Isocyanatgruppen laut IR-Spektroskopie auf Null abgefallen war. Der Ansatz wurde mit weiteren 460 g MPA verdünnt. Man erhielt ein Material mit einem Polymergehalt von 68 Gew.-% und einer Viskosität von 364 mPas bei 23° C.
Der Gehalt an elementarem Si in dieser Formulierung beträgt 4,4 Gew.-% und ist ein Maß für den Gehalt an vernetzungsfähigen Trimethoxysilangruppen.

**Synthesebeispiel 8:** Vergleichsbeispiel zu Synthesebeispiel 6 - nicht erfindungsgemäß *NCO-enthaltendes STP der Formel (II): Verwendung von 1-Mercaptopropyl-3-trimethoxysilan anstelle des erfindungsgemäßen (sekundären) Formamidsilans des Synthesebeispiels 1*

In diesem Synthesebeispiel wurden die NCO-Gruppen von Desmodur® N 3900 mit einem Mercaptosilan teilweise umgesetzt. Das resultierende STP enthält sowohl NCO-Gruppen als auch Silangruppen und wirkt als Hybridsystem, d.h. es kann sowohl über seine NCO-Gruppen als auch und über seine Silangruppen vernetzen:
In einem Kolben mit Thermometer, KPG-Rührer, Rückflusskühler und Tropftrichter wurden unter Stickstoffatmosphäre wurden 536,2 g Desmodur® N 3900 und 90 mg 1,4-Diazabicyclo[2.2.2]octan (DABCO) vorgelegt und auf 82° C erwärmt. Bei dieser Temperatur tropfte man innerhalb von 1 h 371,0 g 3-Mercaptopropyltrimethoxysilan (95%ig, 1,80 mol) zu. Der Ansatz wurde nach dieser Zutropfzeit noch weitere 3 Stunden bei 82° C weitergerührt, bis der Gehalt der NCO-Gruppen auf 5,1 Gew.-% abgefallen war. Bei einer Temperatur von 82° C wurden danach 114 g Butylacetat und 114 g Solventnaphtha zugesetzt und auf Raumtemperatur abgekühlt. Man erhielt ein silanisiertes Polyisocyanat mit einem Polymergehalt von 80 Gew.-% und einer Viskosität von 518 mPas bei 23° C.
Der Gehalt an elementarem Si in dieser Formulierung beträgt 4,4 Gew.-% und ist ein Maß für den Gehalt an vernetzungsfähigen Trimethoxysilangruppen.

### Ausführungsbeispiele und Vergleichsbeispiele

### Ausführungsbeispiel und Vergleichsbeispiel 1

Das in Synthesebeispiel 5 hergestellte STP der Formel (II) wurde zu einer erfindungsgemäßen Beschichtungsmittelzusammensetzung wie folgt formuliert und mit einer formamidsilanfreien Zusammensetzung mit dem gleichen Vernetzungsgrad und dem gleichen Festharzanteil verglichen. Da die Vergleichsformulierung keine Silangruppen enthielt, wurde auch der Katalysator (D) weggelassen.

| | **Ausführungsbeispiel 1** | **Vergleichsbeispiel 1** |
|---|---|---|
| Komponente (A) - Polyol | Setalux® 1774 SS-65 | |
| Komponente (B) - STP | Synthesebeispiel 5 | - |
| Komponente (C) - Polyisocyanat | Desmodur® N 3390 BA | |
| Komponente (D) - Katalysator | X-add® KR 9006 | - |
| Komponente (E) - Verlaufmittel | Byk® 331 | |
| Komponente (F) - Lösungsmittel | MPA / SN 100 | |
| | | |

(fortgesetzt)

| Quantitative Formulierung | | |
|---|---|---|
| Setalux® 1774 SS-65, Lieferform (Lff.) | 56,23 g | 56,23 g |
| Synthesebeispiel 5 | 93,76 g | - |
| Desmodur® N 3390 BA, Lff. | 23,39 g | 23,39 g |
| Byk® 331, 10%ig in BA | 1,22 g | 0,58 g |
| X-add® KR 9006, Lff. | 1,83 g | - |
| MPA / SN 100 (1:1) | 27,50 g | 19,80 g |
| Summe: | 203,93 g | 100,00 g |

Die vorliegenden Prüfrezepturen sind so berechnet, dass das Polyol (A) und das Polyisocyanat (C) äquimolar vernetzt werden, weil das STP von Synthesebeispiel 5 keine freien Isocyanatgruppen mehr aufweist.

Die Zugabemenge des Verlaufsmittels (E) wurde so gewählt, dass, bezogen auf den Festharzanteil (Feststoffgehalt) der Gesamtformulierung, der gleiche Anteil an Verlaufsmittel vorhanden ist.

Z.B. wird Desmodur®N 3390 als 90% Lösung in Butylacetat (BA) geliefert.

Die Herstellung der Beschichtungsmittel erfolgte, indem die Bindemittel mit den übrigen Komponenten gemischt und bei Raumtemperatur verrührt wurden. Zur Einstellung der Spritzviskosität wurde eine Mischung von 1-Methoxypropylacetat-2 / Solventnaphta 100 (1:1) verwendet. Die Lösungsmittelmengen wurden so gewählt, dass die Spritzviskositäten von Ausführungsbeispiel 1 und Vergleichsbeispiel 1 gleich waren. Die eingestellte Spritzviskosität bezieht sich auf die Auslaufzeit im ISO-Becher, 5 mm Düse (DIN EN ISO 2431) und beträgt in diesem und allen weiteren Versuchen 30 Sekunden.

Zur Überprüfung relevanter anwendungstechnischer Eigenschaften wurden die Formulierungen von Ausführungsbeispiel 1 und Vergleichsbeispiel 1 nebeneinander nach der gleichen Prozedur getestet (Anwendungsbeispiel aus der Automobilerstlackierung).

Die nachstehende Tabelle zeigt die Ergebnisse der anwendungstechnischen Prüfung im Vergleich:

| | | | **Ausführungsbeispiel 1** | **Vergleichsbeispiel 1** |
|---|---|---|---|---|
| Pendeldämpfung | n. | 1h 23°C | 188s | 193s |
| | n. | 24h 23°C | 186s | 212s |
| | n. | 16h 60°C | 190s | 212s |
| Lösemittelbeständigkeit 5 Min. Xylol | n. | 1h 23°C | 0 | 2 |
| | n. | 24h 23°C | 0 | 1 |
| | n. | 16h 60°C | 0 | 1 |
| Lösemittelbeständigkeit 5 Min. 1-Methoxypropylacaetat-2 | n. | 1h 23°C | 1 | 2 |
| | n. | 24h 23°C | 1 | 1 |
| | n. | 16h 60°C | 0 | 0 |
| Lösemittelbeständigkeit 5 Min. Ethylacetat | n. | 1h 23°C | 4 | 4 |
| | n. | 24h 23°C | 2 | 4 |
| | n. | 16h 60°C | 1 | 2 |
| Lösemittelbeständigkeit 5 Min. Aceton | n. | 1h 23°C | 4 | 4 |
| | n. | 24h 23°C | 4 | 4 |
| | n. | 16h 60°C | 4 | 4 |
| Nasskratzbeständigkeit Glanzverlust nach 10 Zyklen | n. | 1h 23°C | 13 GU* | 27 GU |
| | n. | 24h 23°C | 15 GU | 33 GU |
| | n. | 16h 60°C | 14 GU | 33 GU |

(fortgesetzt)

| | | Ausführungsbeispiel 1 | Vergleichsbeispiel 1 |
|---|---|---|---|
| Trockenkratzbeständigkeit mit Polishing Paper, Glanzverlust | n. 1h 23°C | 29 GU | 61 GU |
| | n. 24h 23°C | 56 GU | 54 GU |
| | n. 16h 60°C | 47 GU | 53 GU |
| Trockenkratzbeständigkeit mit Stahlwolle, Glanzverlust | n. 1h 23°C | 27 GU | 55 GU |
| | n. 24h 23°C | 28 GU | 50 GU |
| | n. 16h 60°C | 31 GU | 50 GU |
| * GU = Gloss Units | | | |

**Ausführungsbeispiel 2 und Vergleichsbeispiel 2**

Das in Synthesebeispiel 6 hergestellte STP der Formel (II) wurde zu einer erfindungsgemäßen Beschichtungsmittelzusammensetzung wie folgt formuliert und wie in Ausführungsbeispiel 1 und Vergleichsbeispiel 1 mit einer Zusammensetzung ohne tertiäre Formamidsilangruppen mit dem gleichen Vernetzungsgrad und dem gleichen Festharzanteil verglichen:

| | Ausführungsbeispiel 2 | Vergleichsbeispiel 2 |
|---|---|---|
| Komponente (A) - Polyol | Setalux® 1774 SS-65 | |
| Komponente (B) - STP | Synthesebeispiel 6 | - |
| Komponente (C) - Polyisocyanat | - | Desmodur®N 3390 BA |
| Komponente (D) - Katalysator | X-add® KR 9006 | - |
| Komponente (E) - Verlaufmittel | Byk® 331 | |
| Komponente (F) - Lösungsmittel | MPA / SN 100 | |

| Quantitative Formulierung | | |
|---|---|---|
| Setalux® 1774 SS-65, Lff. | 56,23 g | 56,23 g |
| Synthesebeispiel 6 | 127,34 g | - |
| Desmodur® N 3390 BA, Lff. | - | 23,39 g |
| Byk® 331, 10%ig in BA | 1,38 g | 0,58 g |
| X-add® KR 9006, Lff. | 2,08 g | - |
| MPA /SN 100 (1:1) | 44,00 g | 19,80 g |
| Summe: | 231,03 g | 100,00 g |

Die vorliegenden Prüfrezepturen wurden so berechnet, dass das Polyol (A) und das STP (B) bzw. das Polyisocyanat (C) äquimolar vernetzt werden.

Analog zu Ausführungsbeispiel 1 und Vergleichsbeispiel 1 wurden wiederum Lackproben hergestellt und nach den dort angegebenen Methoden miteinander verglichen. Das Ergebnis zeigt die nachstehende Tabelle.

| | | Ausführungsbeispiel 2 | Vergleichsbeispiel 2 |
|---|---|---|---|
| Pendeldämpfung | n. 1h 23°C | 158s | 193s |
| | n. 24h 23°C | 174s | 212s |
| | n. 16h 60°C | 200s | 212s |

(fortgesetzt)

| | | Ausführungsbeispiel 2 | Vergleichsbeispiel 2 |
|---|---|---|---|
| Lösemittelbeständigkeit 5 Min. Xylol | n. 1h 23°C | 0 | 2 |
| | n. 24h 23°C | 0 | 1 |
| | n. 16h 60°C | 0 | 1 |
| Lösemittelbeständigkeit 5 Min. 1-Methoxypropylacaetat-2 | n. 1h 23°C | 0 | 2 |
| | n. 24h 23°C | 0 | 1 |
| | n. 16h 60°C | 0 | 0 |
| Lösemittelbeständigkeit 5 Min. Ethylacetat | n. 1h 23°C | 1 | 4 |
| | n. 24h 23°C | 1 | 4 |
| | n. 16h 60°C | 0 | 2 |
| Lösemittelbeständigkeit 5 Min. Aceton | n. 1h 23°C | 4 | 4 |
| | n. 24h 23°C | 2 | 4 |
| | n. 16h 60°C | 2 | 4 |
| Nasskratzbeständigkeit Glanzverlust nach 10 Zyklen | n. 1h 23°C | 10 GU | 27 GU |
| | n. 24h 23°C | 12 GU | 33 GU |
| | n. 16h 60°C | 12 GU | 33 GU |
| Trockenkratzbeständigkeit mit Polishing Paper, Glanzverlust | n. 1h 23°C | 14 GU | 61 GU |
| | n. 24h 23°C | 22 GU | 54 GU |
| | n. 16h 60°C | 19 GU | 53 GU |
| Trockenkratzbeständigkeit mit Stahlwolle, Glanzverlust | n. 1h 23°C | 18 GU | 55 GU |
| | n. 24h 23°C | 16 GU | 50 GU |
| | n. 16h 60°C | 17 GU | 50 GU |

Aus den obigen Tabellen sieht man, dass die mit erfindungsgemäßen, tertiäre Formamidsilangruppen-haltigen Beschichtungsmitteln lackierten Substrate eine gegenüber den Vergleichsbeispielen, die keine Formamidsilan-modifizierten Verbindungen der Formel (II) enthielten, deutlich verbesserte Beständigkeit gegen verschiedene Lösemittel sowie eine verbesserte Kratzbeständigkeit (Trocken und Nass) aufweisen.

**Ausführungsbeispiel 3 und Vergleichsbeispiel 3**

Das in Synthesebeispiel 5 hergestellte STP der Formel (II) wurde zu einer erfindungsgemäßen Beschichtungsmittelzusammensetzung wie folgt formuliert und mit einer Formulierung verglichen, die das STP aus dem Synthesebeispiel 7 enthält. Die Formulierung entspricht dem Anwendungsbeispiel 1 und dem Vergleichsbeispiel 1. Das STP des Synthesebeispiels 7 (Vergleichsbeispiel) ist strukturell dem erfinderischen STP des Synthesebeispiels 5 vergleichbar, nur dass die Silangruppen nicht über die oben beschriebenen, sekundären Formamidsilane, sondern durch ein 3-Mercaptopropyltrimethoxysilan eingeführt worden sind. Beide Formulierungen enthalten dieselbe Menge an vernetzungsfähigen Silangruppen (siehe Angaben zum Silangehalt in den Synthesebeispielen 5 und 7). Die erhaltenen anwendungstechnischen Ergebnisse ermöglichen einen Vergleich der Wirkung von STPs auf Basis der erfinderischen Formamidsilanbausteine gegen einen Silanbaustein des Standes der Technik.

| | Ausführungsbeispiel 3 | Vergleichsbeispiel 3 |
|---|---|---|
| Komponente (A) - Polyol | Setalux® 1774 SS-65 | |
| Komponente (B) - STP | Synthesebeispiel 5 | Synthesebeispiel 7 |
| Komponente (C) - Polyisocyanat | Desmodur® N 3390 BA | |

(fortgesetzt)

| | Ausführungsbeispiel 3 | Vergleichsbeispiel 3 |
|---|---|---|
| Komponente (D) - Katalysator | X-add® KR 9006 | X-add® KR 9006 |
| Komponente (E) - Verlaufmittel | Byk® 331 | |
| Komponente (F) - Lösungsmittel | MPA / SN 100 | |
| | | |
| Quantitative Formulierung | | |
| Setalux 1774 SS-65, Lff. | 56,23 g | 56,23 g |
| Synthesebeispiel 5 | 93,76 g | - |
| Synthesebeispiel 7 | - | 95,14g |
| Desmodur® N 3390 BA, Lff. | 23,39 g | 23,39 g |
| Byk® 331, 10%ig in BA | 1,22 g | 1,22 g |
| X-add® KR 9006, Lff. | 1,83 g | 1,83 g |
| MPA /SN 100 (1:1) | 27,50 g | 29,48 g |
| Summe: | 203,93 g | 207,29g |

Die vorliegenden Prüfrezepturen sind so berechnet, dass das Polyol (A) und das Polyisocyanat (C) äquimolar vernetzt werden, weil die STP der Synthesebeispiele 5 und 7 keine freien Isocyanatgruppen mehr aufweisen. Ansonsten wird so verfahren wie im Ausführungsbeispiel 1 und Vergleichsbeispiel 1 beschrieben.

Analog zu Ausführungsbeispiel 1 und Vergleichsbeispiel 1 wurden wiederum Lackproben hergestellt und nach den dort angegebenen Methoden miteinander verglichen. Das Ergebnis zeigt die nachfolgende Tabelle.

| | | Ausführungsbeispiel 3 | Vergleichsbeispiel 3 |
|---|---|---|---|
| Pendeldämpfung | n. 1h 23°C | 188s | 162s |
| | n. 24h 23°C | 186s | 172s |
| | n. 16h 60°C | 190s | 205s |
| Lösemittelbeständigkeit 5 Min. Xylol | n. 1h 23°C | 0 | 1 |
| | n. 24h 23°C | 0 | 1 |
| | n. 16h 60°C | 0 | 0 |
| Lösemittelbeständigkeit 5 Min. 1-Methoxypropylacaetat-2 | n. 1h 23°C | 1 | 1 |
| | n. 24h 23°C | 1 | 1 |
| | n. 16h 60°C | 0 | 0 |
| Lösemittelbeständigkeit 5 Min. Ethylacetat | n. 1h 23°C | 4 | 4 |
| | n. 24h 23°C | 2 | 2 |
| | n. 16h 60°C | 1 | 1 |
| Lösemittelbeständigkeit 5 Min. Aceton | n. 1h 23°C | 4 | 4 |
| | n. 24h 23°C | 4 | 4 |
| | n. 16h 60°C | 4 | 4 |
| Nasskratzbeständigkeit Glanzverlust nach 10 Zyklen | n. 1h 23°C | 13 GU | 17 GU |
| | n. 24h 23°C | 15 GU | 19 GU |
| | n. 16h 60°C | 14 GU | 17 GU |

(fortgesetzt)

| | | Ausführungsbeispiel 3 | Vergleichsbeispiel 3 |
|---|---|---|---|
| Trockenkratzbeständigkeit mit Polishing Paper, Glanzverlust | n. 1h 23°C | 29 GU | 63 GU |
| | n. 24h 23°C | 56 GU | 71 GU |
| | n. 16h 60°C | 47 GU | 67 GU |
| Trockenkratzbeständigkeit mit Stahlwolle, Glanzverlust | n. 1h 23°C | 27 GU | 56 GU |
| | n. 24h 23°C | 28 GU | 39 GU |
| | n. 16h 60°C | 31 GU | 36 GU |

Aus der obigen Tabelle sieht man, dass die mit den erfindungsgemäßen Beschichtungsmitteln lackierten Substrate eine gegenüber dem Vergleichsbeispiel, bestehend aus mercaptosilanhaltigen STPs, eine etwas verbesserte Nasskratzbeständigkeit, vor allem aber eine deutlich verbesserte Trockenkratzbeständigkeit aufweisen, was an einem deutlich geringeren Glanzverlust erkannt werden kann. Außerdem ist die Härteentwicklung der erfindungsgemäßen Beschichtung schneller am Endpunkt angekommen als die Beschichtungsformulierung, die das Vergleichsmaterial enthält, da die Pendeldämpfung nicht mehr ansteigt.

**Anwendungsbeispiel 4 und Vergleichsbeispiel 4**

Das in Synthesebeispiel 6 hergestellte isocyanathaltige STP der Formel (II) wurde zu einer erfindungsgemäßen Beschichtungsmittelzusammensetzung wie folgt formuliert und mit einer Formulierung verglichen, die das isocyanathaltige STP aus dem Synthesebeispiel 8 enthält. Die Formulierung entspricht dem Anwendungsbeispiel 2 und dem Vergleichsbeispiel 2. Das STP des Synthesebeispiels 8 ist strukturell dem erfindungsgemäßen STP des Synthesebeispiels 6 vergleichbar, nur dass die Silangruppen nicht über die erfindungsgemäßen Formamidsilanbausteine, sondern durch ein 3-Mercaptopropyltrimethoxysilan eingeführt worden sind. Beide Formulierungen enthalten dieselbe Menge an vernetzungsfähigen Silangruppen (siehe Angaben zum Silangehalt in den Synthesebeispielen 6 und 8). Die erhaltenen, anwendungstechnischen Ergebnisse ermöglichen einen Vergleich der Wirkung von STPs auf Basis der erfindungsgemäßen Formamidsilanbausteine gegen einen Silanbaustein des Standes der Technik.

| | Anwendungsbeispiel 4 | Vergleichsbeispiel 4 |
|---|---|---|
| Komponente (A) - Polyol | Setalux® 1774 SS-65 | |
| Komponente (B) - STP | Synthesebeispiel 6 | Synthesebeispiel 8 |
| Komponente (D) - Katalysator | X-add® KR 9006 | X-add® KR 9006 |
| Komponente (E) - Verlaufmittel | Byk® 331 | |
| Komponente (F) - Lösungsmittel | MPA / SN 100 | |
| | | |
| Quantitative Formulierung | | |
| Setalux® 1774 SS-65, Lff. | 56,23 g | 56,23 g |
| Synthesebeispiel 6 | 127,34 g | 117,52 g |
| Byk® 331, 10%ig in BA | 1,38 g | 1,31 g |
| X-add® KR 9006, Lff. | 2,08 g | 1,96 g |
| MPA / SN 100 (1:1) | 44,00 g | 34,94 g |
| Summe: | 231,03 g | 211,96 g |

Die vorliegenden Prüfrezepturen wurden so berechnet, dass das Polyol (A) und das STP (B) bzw. das Polyisocyanat (C) äquimolar vernetzt werden.

Analog zu Ausführungsbeispiel 2 und Vergleichsbeispiel 2 wurden wiederum Lackproben hergestellt und nach den dort angegebenen Methoden miteinander verglichen. Das Ergebnis zeigt die nachstehende Tabelle.

| | | Anwendungsbeispiel 4 | Vergleichsbeispiel 4 |
|---|---|---|---|
| Pendeldämpfung | n. 1h 23°C | 158s | 48s |
| | n. 24h 23°C | 174s | 69s |
| | n. 16h 60°C | 200s | 152s |
| Lösemittelbeständigkeit 5 Min. Xylol | n. 1h 23°C | 0 | 4 |
| | n. 24h 23°C | 0 | 2 |
| | n. 16h 60°C | 0 | 1 |
| Lösemittelbeständigkeit 5 Min. 1-Methoxypropylacaetat-2 | n. 1h 23°C | 0 | 4 |
| | n. 24h 23°C | 0 | 2 |
| | n. 16h 60°C | 0 | 1 |
| Lösemittelbeständigkeit 5 Min. Ethylacetat | n. 1h 23°C | 1 | 4 |
| | n. 24h 23°C | 1 | 4 |
| | n. 16h 60°C | 0 | 4 |
| Lösemittelbeständigkeit 5 Min. Aceton | n. 1h 23°C | 4 | 4 |
| | n. 24h 23°C | 2 | 4 |
| | n. 16h 60°C | 2 | 4 |
| Nasskratzbeständigkeit Glanzverlust nach 10 Zyklen | n. 1h 23°C | 10 GU | 14 GU |
| | n. 24h 23°C | 12 GU | 17 GU |
| | n. 16h 60°C | 12 GU | 14 GU |
| Trockenkratzbeständigkeit mit Polishing Paper, Glanzverlust | n. 1h 23°C | 14 GU | 42 GU |
| | n. 24h 23°C | 22 GU | 38 GU |
| | n. 16h 60°C | 19 GU | 14 GU |
| Trockenkratzbeständigkeit mit Stahlwolle, Glanzverlust | n. 1h 23°C | 18 GU | 50 GU |
| | n. 24h 23°C | 16 GU | 25 GU |
| | n. 16h 60°C | 17 GU | 17 GU |

Aus der obigen Tabelle sieht man, dass die mit den erfindungsgemäßen Beschichtungsmitteln lackierten Substrate eine gegenüber dem Vergleichsbeispiel, bestehend aus einem mercaptosilanhaltigen STP, deutlich verbesserte Härteentwicklung zeigen. Darüber hinaus erkennt man, dass die Lösungsmittelbeständigkeiten des erfindungsgemäßen Ausführungsbeispiels 4 gegenüber dem Vergleichsbeispiel 4 deutlich verbessert sind.

## Patentansprüche

**1.** Nichtwässrige Beschichtungsmittelzusammensetzung, enthaltend

(A) mindestens ein Polyol (A),
(B) mindestens eine tertiäre Formamidsilan-haltige Verbindung der Formel (I);

Formel (I):

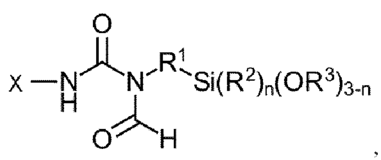

,

wobei in der Formel (I) gilt:

X stellt einen organischen Molekülrest, insbesondere einen gegebenenfalls substituierten, linearen oder verzweigten, aliphatischen oder alizyklischen organischen Molekülrest, dar;
$R^1$ stellt eine mindestens zweiwertige, gegebenenfalls substituierte, lineare oder verzweigte, aliphatische und/oder alizyklische Struktureinheit mit 1 bis 12 Kohlenstoffatomen dar, wobei ein oder mehrere nicht benachbarte Methylengruppen jeweils durch O oder S ersetzt sein können;
$R^2$ und $R^3$ stellen jeweils unabhängig voneinander eine gegebenenfalls substituierte, lineare oder verzweigte, aliphatische und/oder alizyklische Gruppe mit 1 bis 12 Kohlenstoffatomen dar; und
n stellt eine ganze Zahl von 0 bis 2 dar;

(C) gegebenenfalls ein oder mehrere silanfreie aliphatische oder cycloaliphatische Polyisocyanate mit freien oder blockierten Isocyanatgruppen,
wobei wenigstens eine der beiden Komponenten (B) und (C) freie oder blockierte Isocyanatgruppen enthalten muss;
(D) mindestens einen Katalysator für die Vernetzung der Silangruppen der Komponente (B);
(E) gegebenenfalls ein oder mehrere Verlaufshilfsmittel; und
(F) gegebenenfalls ein oder mehrere nichtwässrige Lösungsmittel.

2. Beschichtungsmittelzusammensetzung nach Anspruch 1, wobei die Komponente (B) eine tertiäre Formamidsilan-haltige Verbindung der Formel (II) ist:

Formel (II): 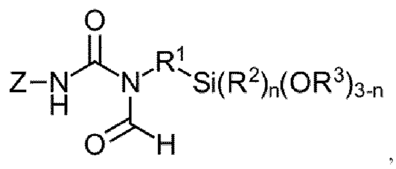,

wobei in der Formel (II) gilt:

Z ist ein Molekülrest, der aus (i) einem Polyisocyanat oder (ii) einem NCO-haltigen Polyurethanprepolymer besteht, wobei in (i) oder (ii) pro Molekül mindestens eine NCO-Gruppe der genannten Strukturen mit einem sekundären Formamidsilan modifiziert ist, so dass eine Verbindung der Formel (II) entsteht; und
$R^1$, $R^2$, $R^3$ und n wie in Anspruch 1 definiert sind.

3. Beschichtungsmittelzusammensetzung nach Anspruch 2, wobei die tertiäre Formamidsilan-haltige Komponente (B) ein Polyurethanprepolymer ist, das keine weiteren freien oder blockierten NCO-Gruppen enthält.

4. Beschichtungsmittelzusammensetzung nach Anspruch 2 oder 3, wobei die tertiäre Formamidsilan-haltige Komponente (B) ein Polyurethanprepolymer ist, das aus einem Polyurethanprepolymer auf Basis von Hexamethylendiisocyanat (HDI) und einem Polyol, wie 2,2,4-Trimethylpentandiol-1,3, besteht, wobei in dem Polyurethanprepolymer alle NCO-Gruppen mit einem sekundären Formamidsilan modifiziert sind, so dass eine Verbindung der Formel (II) entsteht.

5. Beschichtungsmittelzusammensetzung nach Anspruch 1 oder 2, wobei die Komponente (B) ein tertiäres Formamidsilan gemäß der Formeln I oder II ist, welches ein um mindestens eine -NCO Gruppe reduziertes, aliphatisches oder alizyklisches, substituiertes oder unsubstituiertes Polyisocyanat auf Basis eines Vertreters, ausgewählt aus Tetramethylen-1,4-diisocyanat, Pentan-1,5-diisocyanat, Hexamethylen-1,6-diisocyanat, 2,2,4-Trimethylhexan-1,6-diisocyanat, Ethylendiisocyanat, 1,12-Dodecandiisocyanat, 3-Isocyanatomethyl-3,5,5-trimethylcyclohexylisocyanat (Isophorondiisocyanat, IPDI) und Mischungen der vorgenannten Polyisocyanaten, den isomeren Bis-(4,4'-isocyanatocyclohexyl)methanen, sowie deren Mischungen ist, wobei die Isocyanate jeweils als Monomer, Dimer, Trimer und/oder einem durch Urethan-, Biuret-, Uretdion- und/oder Allophanatbildung erhaltenen Polyisocyanatgrundkörper vorliegen, darstellt.

6. Beschichtungsmittelzusammensetzung nach einem der vorhergehenden Ansprüche, wobei

(i) $R^1$ eine zweiwertige Propylengruppe ($-CH_2-CH_2-CH_2-$) darstellt,

$R^3$ -Methyl oder -Ethyl darstellt und n = 0 ist; oder
(ii) $R^1$ eine zweiwertige Propylengruppe ($-CH_2-CH_2-CH_2-$) darstellt; oder
(iii) $R^2$ und $R^3$ jeweils unabhängig voneinander -Methyl oder -Ethyl darstellen; oder
(iv) $R^1$ eine zweiwertige Hexylengruppe ($-CH_2CH_2CH_2CH_2CH_2CH_2-$) darstellt.

7. Beschichtungsmittelzusammensetzung nach einem der Ansprüche 1, 2, 5 und 6, wobei die tertiäre Formamidsilan-haltige Komponente (B) eine mittlere NCO-Funktionalität von 2,0 bis 5,0, bevorzugt von 2,3 bis 4,5 aufweist und einen Gehalt an Isocyanatgruppen von 5,0 bis 50,0 Gew.-%, besonders bevorzugt von 5,0 bis 30,0 Gew.-%, bezogen auf die Komponente (B), besitzt.

8. Beschichtungsmittelzusammensetzung nach einem der Ansprüche 1, 2, 5, 6 und 7, wobei die tertiäre Formamidsilan-haltige Komponente (B) ein um mindestens eine -NCO Gruppe reduziertes, aliphatisches Polyisocyanatharz auf Basis von Hexamethylendiisocyanat (HDI) ist, insbesondere ein niedrigviskoses, aliphatisches Polyisocyanatharz auf Basis von Trimeren des Hexamethylendiisocyanats mit einer NCO-Funktionalität von 2.8 bis 3.6 (Desmodur® N 3900).

9. Beschichtungsmittelzusammensetzung nach einem der vorhergehenden Ansprüche, wobei die Komponente (A) ein Polyacrylatpolyol ist.

10. Beschichtungsmittelzusammensetzung nach einem der Ansprüche 1, 2, und 5-9, wobei die Komponente (B) blockierte oder freie Isocyanatgruppen enthält und die Komponente (C) nicht enthalten ist.

11. Beschichtungsmittelzusammensetzung nach einem der Ansprüche 1, 2, und 5-9, wobei (i) die Komponente (B) blockierte oder freie Isocyanatgruppen enthält und die Komponente (C) enthalten ist oder (ii) die Komponente (B) keine blockierten oder freien Isocyanatgruppen enthält und die Komponente (C) enthalten ist.

12. Beschichtungsmittelzusammensetzung nach einem der Ansprüche 1-9 und 11, wobei die Beschichtungsmittelzusammensetzung aus den Komponenten (A), (B), (C), (D), (E) und (F) besteht.

13. Verwendung der Beschichtungsmittelzusammensetzung gemäß einem der vorhergehenden Ansprüche zur Erstlackierung von metallischen Oberflächen, Kunststoffen und Kompositen, insbesondere Kraftfahrzeugkarosserien oder Teilen davon.

14. Automobilklarlack oder -decklack, enthaltend eine Beschichtungsmittelzusammensetzung gemäß einem oder mehreren der Ansprüche 1-12.

15. Karosserie oder Karosserieteil mit einer darauf aufgebrachten, vernetzten Beschichtungsmittelzusammensetzung gemäß einem oder mehreren der Ansprüche 1-12.

## Claims

1. Nonaqueous coating material composition comprising

(A) at least one polyol (A),
(B) at least one tertiary formamidosilane-containing compound of the formula (I);

Formula (I)

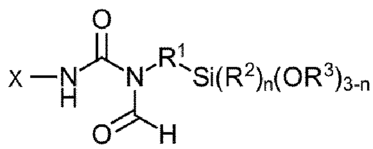

,

where in the formula (I):

X is an organic molecule residue, more particularly an optionally substituted, linear or branched, aliphatic or alicyclic organic molecule residue;

$R^1$ is an at least divalent, optionally substituted, linear or branched, aliphatic and/or alicyclic structural unit having 1 to 12 carbon atoms, it being possible for one or more nonadjacent methylene groups to be replaced in each case by O or S;
$R^2$ and $R^3$ each independently of one another are an optionally substituted, linear or branched, aliphatic and/or alicyclic group having 1 to 12 carbon atoms; and
n is an integer from 0 to 2;

(C) optionally one or more silane-free aliphatic or cycloaliphatic polyisocyanates having free or blocked isocyanate groups,
at least one of the two components (B) and (C) necessarily including free or blocked isocyanate groups;
(D) at least one catalyst for the crosslinking of the silane groups of component (B);
(E) optionally one or more flow control assistants; and
(F) optionally one or more nonaqueous solvents.

**2.** Coating material composition according to Claim 1, wherein component (B) is a tertiary formamidosilane-containing compound of the formula (II):

Formula (

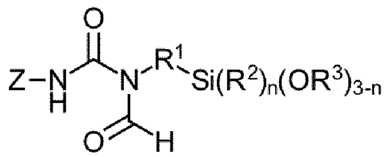

,

where in the formula (II)

Z is a molecule residue which consists of (i) a polyisocyanate or (ii) an NCO-containing polyurethane prepolymer, at least one NCO group of the stated structures in (i) or (ii) being modified, per molecule, with a secondary formamidosilane so that a compound of the formula (II) is formed; and
$R^1$, $R^2$, $R^3$ and n are as defined in Claim 1.

**3.** Coating material composition according to Claim 2, wherein the tertiary formamidosilane-containing component (B) is a polyurethane prepolymer which contains no further free or blocked NCO groups.

**4.** Coating material composition according to Claim 2 or 3, wherein the tertiary formamidosilane-containing component (B) is a polyurethane prepolymer which consists of a polyurethane prepolymer based on hexamethylene diisocyanate (HDI) and a polyol, such as 2,2,4-trimethylpentane-1,3-diol, all NCO groups in the polyurethane prepolymer being modified with a secondary formamidosilane, to form a compound of the formula (II).

**5.** Coating material composition according to Claim 1 or 2, wherein component (B) is a tertiary formamidosilane of the formulae I or II which is - reduced by at least one-NCO group - an aliphatic or alicyclic, substituted or unsubstituted polyisocyanate based on a representative selected from tetramethylene 1,4-diisocyanate, pentane 1,5-diisocyanate, hexamethylene 1,6-diisocyanate, 2,2,4-trimethylhexane 1,6-diisocyanate, ethylene diisocyanate, dodecane 1,12-diisocyanate, 3-isocyanatomethyl-3,5,5-trimethylcyclohexyl isocyanate (isophorone diisocyanate, IPDI) and mixtures of the aforesaid polyisocyanates, the isomeric bis(4,4'-isocyanatocyclohexyl)methanes, and also mixtures thereof, the isocyanates being present in each case as monomer, dimer, trimer and/or a polyisocyanate parent structure obtained by urethane, biuret, uretdione and/or allophanate formation.

**6.** Coating material composition according to any of the preceding claims, wherein

(i) $R^1$ is a divalent propylene group ($-CH_2-CH_2-CH_2-$),
$R^3$ is -methyl or -ethyl and n = 0; or
(ii) $R^1$ is a divalent propylene group ($-CH_2-CH_2-CH_2-$) ; or
(iii) $R^2$ and $R^3$ each independently of one another are -methyl or -ethyl; or
(iv) $R^1$ is a divalent hexylene group ($-CH_2CH_2CH_2CH_2CH_2CH_2-$).

**7.** Coating material composition according to any of Claims 1, 2, 5 and 6, wherein the tertiary formamidosilane-containing component (B) possesses an average NCO functionality of 2.0 to 5.0, preferably of 2.3 to 4.5, and an isocyanate

group content of 5.0 to 50.0 wt%, more preferably of 5.0 to 30.0 wt%, based on component (B).

**8.** Coating material composition according to any of Claims 1, 2, 5, 6 and 7, wherein the tertiary formamidosilane-containing component (B) is an aliphatic polyisocyanate resin based on hexamethylene diisocyanate (HDI) and reduced by at least one -NCO group, more particularly a low-viscosity, aliphatic polyisocyanate resin based on trimers of hexamethylene diisocyanate having an NCO functionality of 2.8 to 3.6 (Desmodur® N 3900).

**9.** Coating material composition according to any of the preceding claims, wherein component (A) is a polyacrylate polyol.

**10.** Coating material composition according to any of Claims 1, 2, and 5-9, wherein component (B) contains blocked or free isocyanate groups and component (C) is absent.

**11.** Coating material composition according to any of Claims 1, 2, and 5-9, wherein (i) component (B) contains blocked or free isocyanate groups and component (C) is present, or (ii) component (B) contains no blocked or free isocyanate groups and component (C) is present.

**12.** Coating material composition according to any of Claims 1-9 and 11, wherein the coating material composition consists of components (A), (B), (C), (D), (E) and (F).

**13.** Use of the coating material composition according to any of the preceding claims for the original finishing of metallic surfaces, plastics and composites, especially motor vehicle bodies or parts thereof.

**14.** Automobile clearcoat or topcoat material comprising a coating material composition according to one or more of Claims 1-12.

**15.** Vehicle body or bodywork component bearing an applied crosslinked coating material composition according to one or more of Claims 1-12.

## Revendications

**1.** Composition d'agent de revêtement non aqueuse, contenant :

(A) au moins un polyol (A),
(B) au moins un composé contenant du formamide-silane tertiaire de formule (I)

Formule (I) :

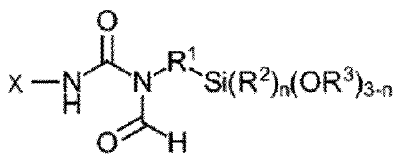

avec, dans la formule (I) :

X représentant un radical de molécule organique, notamment un radical de molécule organique linéaire ou ramifié, aliphatique ou alicyclique, éventuellement substitué ;
$R^1$ représentant une unité structurale au moins bivalente, éventuellement substituée, linéaire ou ramifiée, aliphatique et/ou alicyclique, contenant 1 à 12 atomes de carbone, un ou plusieurs groupes méthylène non voisins pouvant chacun être remplacés par O ou S ;
$R^2$ et $R^3$ représentant chacun indépendamment l'un de l'autre un groupe linéaire ou ramifié, aliphatique et/ou alicyclique, éventuellement substitué, contenant 1 à 12 atomes de carbone ; et
n représentant un nombre entier de 0 à 2 ;

(C) éventuellement un ou plusieurs polyisocyanates aliphatiques ou cycloaliphatiques sans silane contenant

des groupes isocyanate libres ou bloqués,
au moins un des deux composants (B) et (C) devant contenir des groupes isocyanate libres ou bloqués ;
(D) au moins un catalyseur pour la réticulation des groupes silane du composant (B) ;
(E) éventuellement un ou plusieurs adjuvants de nivellement ; et
(F) éventuellement un ou plusieurs solvants non aqueux.

**2.** Composition d'agent de revêtement selon la revendication 1, dans laquelle le composant (B) est un composé contenant un formamide-silane tertiaire de formule (II) :

Formule (II) :

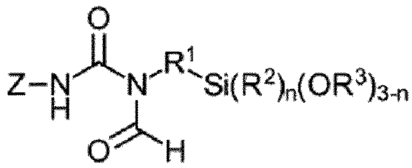

avec, dans la formule (II) :

Z représentant un radical de molécule, qui est constitué par (i) un polyisocyanate ou (ii) un prépolymère de polyuréthane contenant NCO, dans (i) ou (ii), par molécule, au moins un groupe NCO des structures indiquées étant modifié avec un formamide-silane secondaire de manière à former un composé de formule (II) ; et
$R^1$, $R^2$, $R^3$ et n étant tels que définis dans la revendication 1.

**3.** Composition d'agent de revêtement selon la revendication 2, dans laquelle le composant contenant du formamide-silane tertiaire (B) est un prépolymère de polyuréthane qui ne contient pas de groupes NCO libres ou bloqués supplémentaires.

**4.** Composition d'agent de revêtement selon la revendication 2 ou 3, dans laquelle le composant contenant du formamide-silane tertiaire (B) est un prépolymère de polyuréthane qui est constitué par un prépolymère de polyuréthane à base de diisocyanate d'hexaméthylène (HDI) et un polyol, tel que le 2,2,4-triméthylpentane-diol-1,3, tous les groupes NCO dans le prépolymère de polyuréthane étant modifiés avec un formamide-silane secondaire de manière à former un composé de formule (II).

**5.** Composition d'agent de revêtement selon la revendication 1 ou 2, dans laquelle le composant (B) est un formamide-silane tertiaire selon la formule I ou II, qui est un polyisocyanate aliphatique ou alicyclique, substitué ou non substitué, réduit d'au moins un groupe -NCO, à base d'un élément choisi parmi le 1,4-diisocyanate de tétraméthylène, le 1,5-diisocyanate de pentane, le 1,6-diisocyanate d'hexaméthylène, le 1,6-diisocyanate de 2,2,4-triméthylhexane, le diisocyanate d'éthylène, le diisocyanate de 1,12-dodécane, l'isocyanate de 3-isocyanatométhyl-3,5,5-triméthylcyclohexyle (diisocyanate d'isophorone, IPDI) et les mélanges des polyisocyanates susmentionnés, les bis-(4,4'-isocyanatocyclohexyl)méthanes isomères, ainsi que leurs mélanges, les isocyanates se présentant à chaque fois sous la forme d'un monomère, d'un dimère, d'un trimère et/ou d'un corps de base de polyisocyanate obtenu par formation d'uréthane, de biuret, d'uretdione et/ou d'allophanate.

**6.** Composition d'agent de revêtement selon l'une quelconque des revendications précédentes, dans laquelle

(i) $R^1$ représente un groupe propylène bivalent ($-CH_2-CH_2-CH_2-$),
$R^3$ représente méthyle ou éthyle et n = 0 ; ou
(ii) $R^1$ représente un groupe propylène bivalent ($-CH_2-CH_2-CH_2-$) ; ou
(iii) $R^2$ et $R^3$ représentent chacun indépendamment l'un de l'autre méthyle ou éthyle ; ou
(iv) $R^1$ représente un groupe hexylène bivalent ($-CH_2CH_2CH_2CH_2CH_2CH_2-$).

**7.** Composition d'agent de revêtement selon l'une quelconque des revendications 1, 2, 5 et 6, dans laquelle le composant contenant du formamide-silane tertiaire (B) présente une fonctionnalité NCO moyenne de 2,0 à 5,0, de préférence de 2,3 à 4,5, et une teneur en groupes isocyanate de 5,0 à 50,0 % en poids, de manière particulièrement préférée de 5,0 à 30,0 % en poids, par rapport au composant (B).

**8.** Composition d'agent de revêtement selon l'une quelconque des revendications 1, 2, 5, 6 et 7, dans laquelle le composant contenant du formamide-silane tertiaire (B) est une résine de polyisocyanate aliphatique réduite d'au moins un groupe NCO, à base de diisocyanate d'hexaméthylène (HDI), notamment une résine de polyisocyanate aliphatique faiblement visqueuse à base trimères de diisocyanate d'hexaméthylène ayant une fonctionnalité NCO de 2,8 à 3,6 (Desmodur® N 3900).

**9.** Composition d'agent de revêtement selon l'une quelconque des revendications précédentes, dans laquelle le composant (A) est un polyacrylate-polyol.

**10.** Composition d'agent de revêtement selon l'une quelconque des revendications 1, 2 et 5 à 9, dans laquelle le composant (B) contient des groupes isocyanate bloqués ou libres et le composant (C) n'est pas contenu.

**11.** Composition d'agent de revêtement selon l'une quelconque des revendications 1, 2 et 5 à 9, dans laquelle (i) le composant (B) contient des groupes isocyanate bloqués ou libres et le composant (C) est contenu, ou (ii) le composant (B) ne contient pas de groupes isocyanate bloqués ou libres et le composant (C) est contenu.

**12.** Composition d'agent de revêtement selon l'une quelconque des revendications 1 à 9 et 11, dans laquelle la composition d'agent de revêtement est constituée par les composants (A), (B), (C), (D), (E) et (F).

**13.** Utilisation de la composition d'agent de revêtement selon l'une quelconque des revendications précédentes pour le premier vernissage de surfaces métalliques, de matières plastiques et de composites, notamment de carrosserie de véhicules automobiles ou leurs parties.

**14.** Vernis automobile transparent ou supérieur, contenant une composition d'agent de revêtement selon une ou plusieurs des revendications 1 à 12.

**15.** Carrosserie ou partie de carrosserie comprenant une composition d'agent de revêtement selon une ou plusieurs des revendications 1 à 12 réticulée appliquée sur celle-ci.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1273640 A
- WO 2007033786 A
- WO 200874489 A
- WO 2009077181 A
- US 20110269897 A
- WO 2012168079 A
- WO 2014086530 A
- EP 2676982 A
- EP 2735578 A
- DE 19625773 A1
- DE 3807571 A1
- DE 3706095 A1
- EP 0358153 B1
- US 4754914 A1
- DE 4421823 A1
- WO 199222615 A
- DE 19709465 A1
- DE 19709476 A1
- DE 2848906 A1
- DE 19524182 A1
- DE 19828742 A1
- DE 19628143 A1
- DE 19628142 A1
- EP 0554783 A1
- WO 199527742 A
- WO 198202387 A
- WO 199802466 A
- DE 19850243 A1
- EP 0689556 A
- EP 0937110 A
- US 4598131 A


### In der Beschreibung aufgeführte Nicht-Patentliteratur


- **W. WIECZORREK.** Stoye/Freitag, Lackharze. C. Hanser-Verlag, 1996, 215 ff
- **J. W. HOLUBKA et al.** *J. Coat. Tech.,* 2000, vol. 72 (901), 77
- Römpp Lexikon Lacke und Druckfarben. Georg Thieme Verlag, 1998, 605, , 606
- Römpp Lexikon Lacke und Druckfarben. Georg Thieme Verlag, 1998, 598
- **A. VALET.** Lichtschutzmittel für Lacke. Vincentz Verlag, 1996
- Chemische Technik. Wiley-VCH, vol. 1, 333-334